# EUROPEAN PATENT APPLICATION

(11) **EP 3 813 009 A1**
(43) Date of publication of application: **28.04.2021**
(21) Application number: 19823434.6
(22) Date of filing: 11.06.2019
(51) Int. Cl.: G06Q 50/12, G06F 13/00, G10L 13/00, G10L 15/22

(54) **PROGRAM, INFORMATION PROCESSING METHOD, INFORMATION PROCESSING DEVICE, AND INFORMATION PROCESSING SYSTEM**

(30) Priority: 21.06.2018 JP 2018118253; 25.09.2018 WO PCT/JP2018/035498
(71) Applicant: TradFit Co., Ltd., Tokyo 102-0074 (JP)
(72) Inventor: TODA, Yoshiki, Tokyo 102-0074 (JP); HSU, Shih po, Tokyo 102-0074 (JP)
(74) Representative: Cabinet Beaumont
(86) International application number: PCT/JP2019/023112
(87) International publication number: WO 2019/244715

(57) **Abstract**

The present invention provides, for example, a program to control a device in a guest room in accordance with user-related information or, in particular, a user's attributes.

The program causes a computer to execute the steps of: acquiring a request based on voice data obtained from a user interface (20) located in a guest room of a lodging facility, and a user interface identifier by which the user interface (20) is identified; acquiring guest information on a guest staying in the guest room in accordance with the user interface identifier acquired; and controlling a device (56) in the guest room in accordance with the guest information and the request acquired.

## Description

### TECHNICAL FIELD

The present invention relates to programs, information processing methods, information processing devices, and information processing systems.

### BACKGROUND ART

A proposed communication system enables natural language interaction between a user and a robot. The robot includes a microphone and a speaker. A voice uttered by the user is acquired through the microphone and sent to a server, and then a response generated by making reference to a conversation database is acquired from the server and output from the speaker, thus enabling interaction with the user (see Patent Document 1).

### CITATION LIST

### Patent Document

[Patent Document 1] Japanese Unexamined Patent Application Publication No. 2017-191531

### SUMMARY OF THE INVENTION

### Problem to be Solved by the Invention

Lodging facilities, such as hotels, accommodate various guests of different attributes, such as ages, genders, nationalities, and addresses. The system disclosed in Patent Document 1, however, is unable to control devices in guest rooms in accordance with the attributes of individual guests.

In one aspect, an object of the present invention is to provide, for example, a program to control a device in a guest room in accordance with user-related information or, in particular, a user's attributes.

### Means for Solving the Problem

A program causes a computer to execute the steps of: acquiring a request based on voice data obtained from a user interface located in a guest room of a lodging facility, and a user interface identifier by which the user interface is identified; acquiring guest information on a guest staying in the guest room in accordance with the user interface identifier acquired; and controlling a device in the guest room in accordance with the guest information and the request acquired.

### Effects of the Invention

In one aspect, the present invention is able to provide, for example, a program to control a device in a guest room in accordance with user-related information or, in particular, a user's attributes.

### BRIEF DESCRIPTION OF THE DRAWINGS

[FIG. 1] FIG. 1 is a diagram schematically illustrating how an information processing system operates.
[FIG. 2] FIG. 2 is a diagram illustrating a configuration of the information processing system.
[FIG. 3] FIG. 3 is a diagram illustrating a record layout of a PMSDB.
[FIG. 4] FIG. 4 is a diagram illustrating a record layout of a speaker DB.
[FIG. 5] FIG. 5 is a diagram illustrating a record layout of an introduced facility DB.
[FIG. 6] FIG. 6 is a diagram schematically illustrating a recommendation model.
[FIG. 7] FIG. 7 is a sequence diagram schematically illustrating how the information processing system operates.
[FIG. 8] FIG. 8 is a flow chart illustrating a processing procedure of a program.
[FIG. 9] FIG. 9 is a flow chart illustrating a processing procedure of a program according to Embodiment 2.
[FIG. 10] FIG. 10 is a diagram illustrating a record layout of a guide history DB.
[FIG. 11] FIG. 11 is a diagram illustrating an exemplary report screen.
[FIG. 12] FIG. 12 is a flow chart illustrating a processing procedure of a program according to Embodiment 3.
[FIG. 13] FIG. 13 is a diagram schematically illustrating a recommendation model according to Embodiment 4.
[FIG. 14] FIG. 14 is a flow chart illustrating a processing procedure of a program according to Embodiment 4.
[FIG. 15] FIG. 15 is a diagram illustrating a record layout of a user DB.
[FIG. 16] FIG. 16 is a flow chart illustrating a processing procedure of a program according to Embodiment 5.
[FIG. 17] FIG. 17 is a diagram illustrating a configuration of an information processing system according to Embodiment 6.
[FIG. 18] FIG. 18 is a sequence diagram schematically illustrating how the information processing system according to Embodiment 6 operates.
[FIG. 19] FIG. 19 is a diagram illustrating an exemplary screen presented on a display device.
[FIG. 20] FIG. 20 is a diagram illustrating an exemplary screen presented on the display device.
[FIG. 21] FIG. 21 is a diagram schematically illustrating a recommendation model according to Embodiment 7.
[FIG. 22] FIG. 22 is a diagram illustrating an exemplary screen presented on a display device according to Embodiment 7.
[FIG. 23] FIG. 23 is a sequence diagram schematically illustrating how the information processing system according to Embodiment 7 operates.
[FIG. 24] FIG. 24 is a diagram illustrating a configuration of an information processing system according to Embodiment 8.
[FIG. 25] FIG. 25 is a diagram illustrating a record layout of a hotel category DB.
[FIG. 26] FIG. 26 is a diagram illustrating a recommendation model according to a variation of Embodiment 9.
[FIG. 27] FIG. 27 is a diagram illustrating a record layout of a PMSDB according to Embodiment 10.
[FIG. 28] FIG. 28 is a diagram illustrating a record layout of an external information DB according to Embodiment 11.
[FIG. 29] FIG. 29 is a flow chart illustrating a processing procedure of a program according to Embodiment 11.
[FIG. 30] FIG. 30 is a functional block diagram of an information processing system according to Embodiment 12.
[FIG. 31] FIG. 31 is a diagram illustrating a configuration of an information processing system according to Embodiment 13.

### MODES FOR CARRYING OUT THE INVENTION

### Embodiment 1

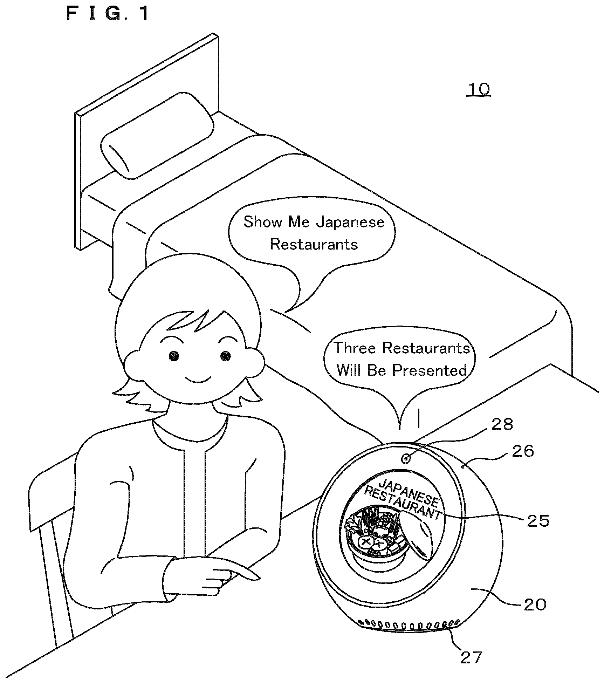

FIG. 1 is a diagram schematically illustrating how an information processing system 10 operates. The information processing system 10 includes a smart speaker 20 located in a guest room of a lodging facility, such as a hotel. The smart speaker 20 has a substantially semispherical shape. The smart speaker 20 is provided on its flat surface with a circular touch screen 25 and a camera 28. The smart speaker 20 is located such that the touch screen 25 faces obliquely upward. The smart speaker 20 is provided on its upper spherical surface with a microphone 26 and is provided on its lower spherical surface with a speaker 27.

The present embodiment will be described on the assumption that the smart speaker 20 is used as a user interface. The user interface, however, is not limited to the smart speaker 20. The user interface may be any other interface that is able to acquire information on a guest (or user) and transmit information to the guest. A smartphone or PC that has the functions of a microphone and a speaker, for example, may alternatively be used as the user interface.

A guest utters, for example, a request "Show Me Japanese Restaurants". The information processing system 10 introduces Japanese restaurant(s) to the guest or extracts recommendable Japanese restaurant(s) in accordance with the attributes of the guest recorded in a property management system (PMS). The information processing system 10 utters "Three Restaurants Will Be Presented" from the speaker 27, and presents information concerning the first Japanese restaurant on the touch screen 25. The details of the request are not limited to Japanese restaurant(s) but may be any information on product(s) or service(s). Recommendations may be information (product/service information) on product(s) or service(s).

The guest operates the touch screen 25 so as to make comparisons between pieces of information concerning the three restaurants extracted. The guest is able to cause the touch screen 25 to present information, such as map(s) indicating the location(s) of the restaurant(s) and the telephone number(s) of the restaurant(s), by performing operations, such as tapping. The operations performed on the touch screen 25 are similar to those performed on existing smartphones or other devices and will thus not be described in detail.

PMSs will be briefly described below. PMSs are lodging facility management systems that record information, such as guests' addresses, names, nationalities, payment methods, companions, and lodging histories. PMSs used at lodging facilities that provide services catering to individual customers (e.g., high-class hotels) also record information, such as guests' preferences, various anniversaries, and allergies. A PMS is installed for each lodging facility or for each chain of lodging facilities and is used to process, for example, acceptance of reservations, check-ins, check-outs, and payment.

Making reference to such a PMS enables the information processing system 10 to present Japanese restaurants fitting to the preferences and situations of users. Japanese restaurants presented by the information processing system 10 differ, for example, between when users are with children and when users are couples. Japanese restaurants presented by the information processing system 10 also differ between when users are in their twenties and when users in their seventies.

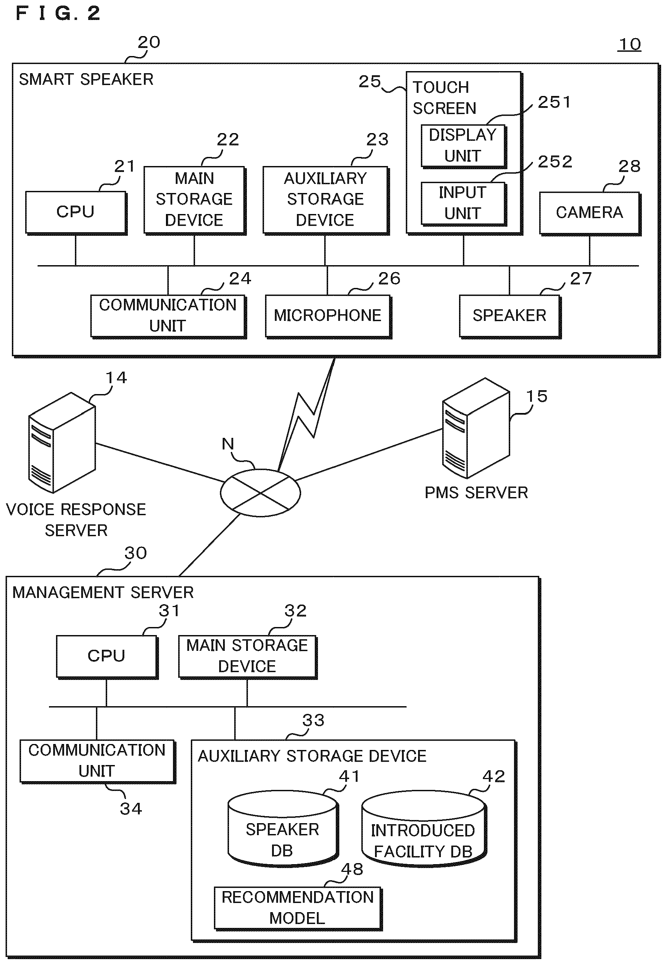

FIG. 2 is a diagram illustrating a configuration of the information processing system 10. The information processing system 10 includes, in addition to the smart speaker 20 described above, a management server 30, a voice response server 14, and a PMS server 15 (which is a network-connected PMS).

The smart speaker 20 includes, in addition to the touch screen 25, the microphone 26, the speaker 27, and the camera 28 described above, a central processing unit (CPU) 21, a main storage device 22, an auxiliary storage device 23, a communication unit 24, and a bus. The CPU 21 is an arithmetic and control unit to execute a program according to the present embodiment. A single or a plurality of CPUs or multicore CPUs, for example, may be used as the CPU 21. The CPU 21 is connected through the bus to hardware units included in the smart speaker 20.

The main storage device 22 is a storage device, such as a static random access memory (SRAM), a dynamic random access memory (DRAM), or a flash memory. The main storage device 22 temporarily stores information necessary in the course of processing by the CPU 21 and the program being executed by the CPU 21.

The auxiliary storage device 23 is a storage device, such as an SRAM, a flash memory, or a hard disk. The auxiliary storage device 23 stores the program to be executed by the CPU 21 and various data necessary for execution of the program.

The communication unit 24 is an interface through which data communication between the smart speaker 20 and a network is carried out. The touch screen 25 includes a display unit 251, such as a liquid crystal display panel, and an input unit 252 stacked on the display unit 251.

The shape of the smart speaker 20 in FIG. 1 is illustrated by way of example. The shape of the smart speaker 20 is thus not limited to a substantially semispherical shape. The smart speaker 20 may have any shape, such as a columnar shape or a cuboid shape. The smart speaker 20 may be a general-purpose information processing device, such as a smartphone, a tablet, or a personal computer. The smart speaker 20 may be a combination of a general-purpose information processing device (such as a personal computer), an external microphone, an external speaker, and an external camera.

The management server 30 includes a CPU 31, a main storage device 32, an auxiliary storage device 33, a communication unit 34, and a bus. The CPU 31 is an arithmetic and control unit to execute the program according to the present embodiment. A single or a plurality of CPUs or multicore CPUs, for example, may be used as the CPU 31. The CPU 31 is connected through the bus to hardware units included in the management server 30.

The main storage device 32 is a storage device, such as an SRAM, a DRAM, or a flash memory. The main storage device 32 temporarily stores information necessary in the course of processing by the CPU 31 and the program being executed by the CPU 31.

The auxiliary storage device 33 is a storage device, such as an SRAM, a flash memory, or a hard disk. The auxiliary storage device 33 stores a speaker database (DB) 41, an introduced facility DB 42, a recommendation model 48, the program to be executed by the CPU 31, and various data necessary for execution of the program. The recommendation model 48 will be discussed later.

The speaker DB 41, the introduced facility DB 42, and the recommendation model 48 may be recorded in an external mass storage device connected to the management server 30 or in a different server connected through the network to the management server 30.

The communication unit 34 is an interface through which data communication between the management server 30 and the network is carried out. The management server 30 is a general-purpose information processing device, such as a personal computer or a server machine. The management server 30 may be a virtual machine that operates on a large-scale computer. The management server 30 may be a combination of a plurality of computers or server machines.

The voice response server 14 is an information processing device that acquires voice data from the smart speaker 20 so as to perform a process, such as voice recognition, and transmits voice data for a response to the smart speaker 20.

The PMS server 15 is an information processing device to manage the PMS. Each of the voice response server 14 and the PMS server 15 is a general-purpose information processing device, such as a personal computer or a server machine. The voice response server 14 and the PMS server 15 may each be a virtual machine that operates on a large-scale computer. The voice response server 14 and the PMS server 15 may each be a combination of a plurality of computers or server machines.

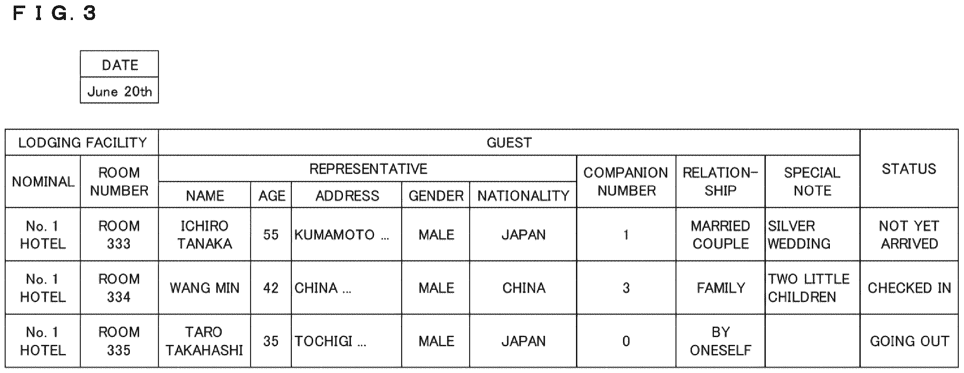

FIG. 3 is a diagram illustrating a record layout of a PMSDB. The PMSDB is a DB to record pieces of information concerning users who are staying or have made reservations at lodging facilities (which are included in information recorded in the PMS server 15) such that associations are established between the pieces of information. The PMSDB includes a date field, a lodging facility field, a guest field, and a status field. The lodging facility field includes a nominal field and a room number field.

The guest field includes a representative field, a companion number field, a relationship field, and a special note field. The representative field includes a name field, an age field, an address field, a gender field, and a nationality field.

The date field records dates. The nominal field records the names of lodging facilities. The room number field records the room numbers of guest rooms. The name field records the names of representatives. The age field records the ages of representatives. The address field records the addresses of representatives. The gender field records the genders of representatives. The nationality field records the nationalities of representatives.

The companion number field records the numbers of people accompanying representatives and staying as guests. The relationship field records relationships between representatives and companions. The special note field records special notes on guests. The status field records the statuses of guests. Pieces of information recorded in the subfields of the guest field are examples of guest attributes indicative of the attributes of guests.

The PMSDB includes a single record for each guest room. Data in the subfields of the guest field is acquired upon acceptance of reservations or is entered by, for example, persons in charge at the front desks at the time of check-ins. Data on guests who have stayed at lodging facilities in the past may be acquired from data recorded during their stays in the past.

The following description uses, as an example, a record for Room 333 in FIG. 3. The subfields of the representative field record the age, address, gender, and nationality of Mr. "Ichiro Tanaka" who is the representative. "1" in the companion number field indicates that a total of two persons (i.e., Mr. "Ichiro Tanaka", who is the representative, and one companion) will stay. "Married Couple" in the relationship field indicates that the two persons who will stay in Room 333 are a married couple. "Silver Wedding" in the special note field indicates that the married couple who will stay in Room 333 will celebrate their silver wedding. "Not Yet Arrived" in the status field indicates that they have not yet checked in.

The following description uses, as an example, a record for Room 334 in FIG. 3. The subfields of the representative field record the age, address, gender, and nationality of Mr. "Wang Min" who is the representative. "3" in the companion number field indicates that a total of four persons (i.e., Mr. "Wang Min", who is the representative, and three companions) will stay. "Family" in the relationship field indicates that the four persons who will stay in Room 334 are a family. "Two Little Children" in the special note field indicates that two of the four persons who will stay in Room 334 are little children. "Checked In" in the status field indicates that they have already checked in.

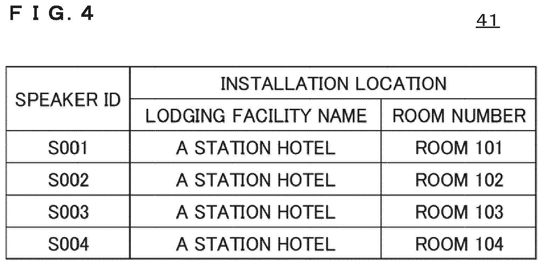

FIG. 4 is a diagram illustrating a record layout of the speaker DB 41. The speaker DB 41 is a DB to record speaker identifiers (IDs), which are uniquely assigned to the smart speakers 20, and the installation locations of the smart speakers 20 such that associations are established between the speaker IDs and the installation locations. In the present embodiment, the speaker IDs are used as specific examples of identifiers for identification of the smart speakers 20. User interface identifiers for user interface identification may be any user interface identification information, such as the room numbers of guest rooms where the user interfaces are installed, or IP addresses assigned to the user interfaces.

The speaker DB 41 includes a speaker ID field and an installation location field. The installation location field includes a lodging facility name field and a room number field. The speaker ID field records speaker IDs. The lodging facility name field records the names of lodging facilities. The room number field records the room numbers of guest rooms. The speaker DB 41 includes a single record for each smart speaker 20.

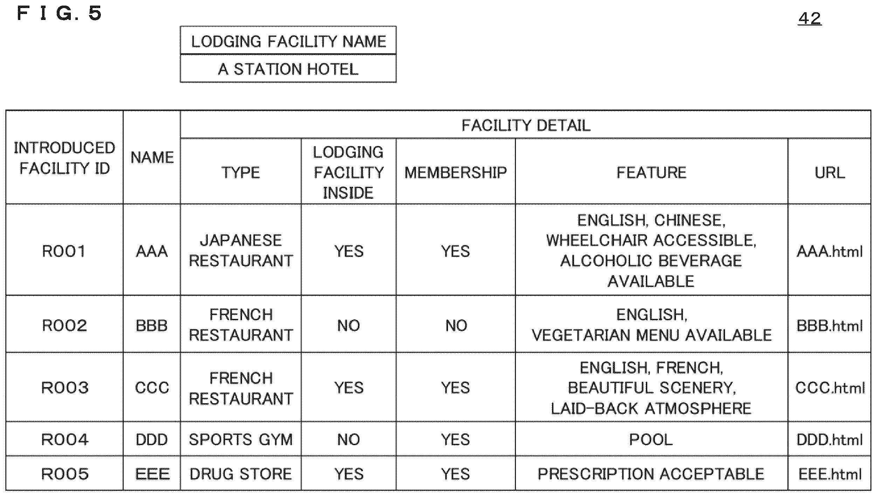

FIG. 5 is a diagram illustrating a record layout of the introduced facility DB 42. The introduced facility DB 42 is a DB to record introduced facility IDs (which are uniquely assigned to facilities to be introduced to guests by lodging facilities) and detailed information such that associations are established between the introduced facility IDs and the detailed information.

The introduced facility DB 42 includes a lodging facility name field, an introduced facility ID field, a name field, and a facility detail field. The facility detail field includes a type field, a lodging facility inside field, a membership field, a feature field, and a uniform resource locator (URL) field.

The lodging facility name field records the names of lodging facilities. The introduced facility ID field records introduced facility IDs. The name field records the names of introduced facilities. The type field records facility types. The lodging facility inside field records whether introduced facilities are located inside lodging facilities. When an introduced facility is located inside a lodging facility, "YES" is recorded in the lodging facility inside field. When an introduced facility is located outside a lodging facility, "NO" is recorded in the lodging facility inside field. A facility for which "YES" is recorded in the lodging facility inside field is an example of a facility located inside a lodging facility.

The membership field records whether guests are members of particular groups. The term "group" refers to, for example, a group of facilities sponsored by lodging facilities and intended for tourists. "YES" in the membership field indicates facilities for paid members. "NO" in the membership field indicates other facilities. The term "group" may refer to, for example, a local tourist association or a local shopping mall.

The feature field records the features of facilities, such as available languages and available services. The URL field records the URLs of world wide web (WEB) sites through which advertisements for facilities, for example, are presented on the touch screens 25.

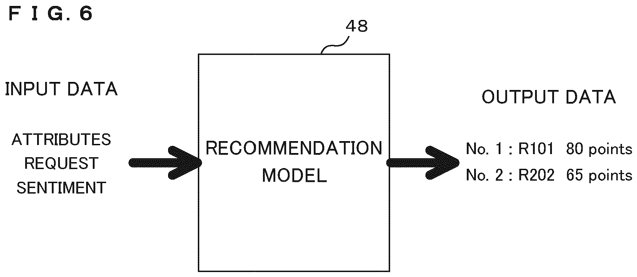

FIG. 6 is a diagram schematically illustrating the recommendation model 48. The recommendation model 48 is a model that receives user-related input data and outputs output data. The input data is, for example, users' attributes, users' requests, and users' sentiments guessed by analyzing users' voices.

The users' attributes include matters recorded in the subfields of the guest field described with reference to FIG. 3. The users' attributes may include, for example, check-in times, check-out times, reservation methods, and room charge payment methods. The users' requests are, for example, question items obtained by conducting voice analysis on requests made by users, such as "Japanese Restaurant", "Convenience Store", or "Drug Store".

The users' sentiments are, for example, "Relaxed", "Angry", "Impatient", "Hungry", or "Unwell". The users' sentiments may be expressed using the percentages of combined sentiments, such as "Angry 80%, Hungry 20%".

The input data may include, for example, weather and traffic information. When the weather is bad, for example, the recommendation model 48 outputs output data indicating a low level of recommendation for a facility that requires the user to walk a long distance. When a train is delayed, the recommendation model 48 outputs output data indicating a low level of recommendation for a facility that requires the user to ride on the train. The input data may include the temperature, humidity, and lighting color and brightness of the guest room, and the environment of the guest room, such as the volume of a television set. When the lighting of the guest room is dark, for example, the recommendation model 48 outputs output data indicating a high level of recommendation for a bar with dimmed lighting. The output data is an introduced facility ID for a facility to be introduced to the user and a score indicative of a level of recommendation for the facility.

The recommendation model 48 is created by machine learning, such as deep learning, on the basis of teaching data collected through questionnaires filled out by concierge(s), for example. The teaching data indicates facilities to be introduced by experienced concierge(s) in response to various pieces of the input data. The recommendation model 48 may be, for example, a program provided by coding a decision tree that determines a facility to be introduced on the basis of the input data.

A specific example of collecting teaching data will be described. Input data for one user is shown to an experienced concierge. The concierge makes a response by determining a facility or facilities to be introduced to the user. The response from the concierge may be a single facility to be introduced, or may be a plurality of facilities with ranking or scores. The response from the concierge is recorded in association with the input data and used as teaching data for machine learning.

Machine learning that uses teaching data, which has been described above, will be described below. Input data and a response in teaching data are respectively used as an explanatory variable and a response variable. When the explanatory variable is input to a neutral network, a parameter of the neutral network is adjusted such that an output from the neutral network approaches the response variable. Performing these processes creates the recommendation model 48 that outputs, upon receiving input data, a response close to a determination made by the experienced concierge (i.e., a facility or facilities that is/are desirably introduced to the user in response to the input data).

A specific example will be described using, as an example, the record for Room 334 in FIG. 3. Suppose that Mr. "Wang Min" and his companions, who are a family of four with two little children, are staying in Room 334, and Mr. "Wang Min" or one of his companions has inquired about restaurants for dinner. In this case, the experienced concierge introduces, for example, restaurants with private rooms or casual restaurants that are easy for families with little children to enter. Similarly, when Mr. "Wang Min" or one of his companions has inquired about sightseeing tours, the experience concierge introduces sightseeing tours that little children can enjoy.

Suppose that Mr. "Wang Min" and his wife stay by themselves on their anniversary and have inquired about restaurants for dinner. In this case, the experienced concierge introduces restaurants suitable for their anniversary (e.g., restaurants with beautiful night views) in consideration of the preferences of the husband and wife. When they inquired about sightseeing tours, the experienced concierge introduces sightseeing tours for adults.

When Mr. "Wang Min" stays by himself on a business trip and has inquired about restaurants for dinner, the experienced concierge introduces restaurants that suit the preferences of Mr. "Wang Min".

The experienced concierge described above by way of example would make different responses depending on who is/are companion(s), if the representative is the same. Causing the recommendation model 48 to learn teaching data created on the basis of responses from such an experienced concierge enables the recommendation model 48 to output suitable responses reflective of who is/are companions(s).

When detailed information, such as the names, ages, addresses, genders, and nationalities of companions, is recorded in the PMSDB, the detailed information on the companions may be added to teaching data. This provides the recommendation model 48 that outputs more suitable responses in accordance with combinations of representatives and companions.

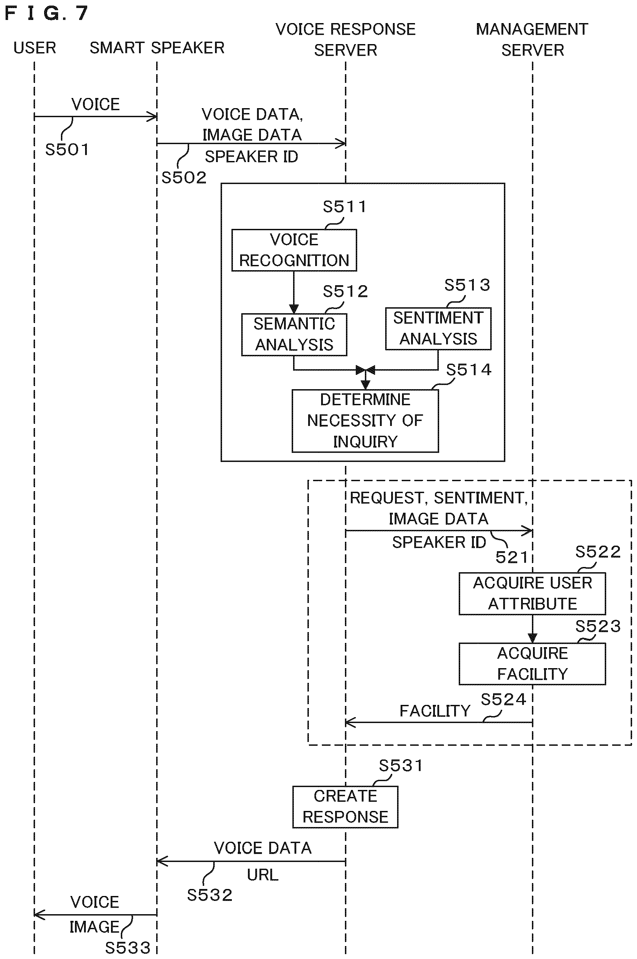

FIG. 7 is a sequence diagram schematically illustrating how the information processing system 10 operates. A user makes a request to the smart speaker 20 by a natural language voice, such as "Show Me Japanese Restaurants". The voice is acquired through the microphone 26 (step S501). The CPU 21 transmits, to the voice response server 14, voice data obtained by converting the acquired voice into an electric signal, an image captured by the camera 28, and a speaker ID (step S502).

In accordance with the voice data, the voice response server 14 conducts voice recognition so as to convert the user's request into a character string (step S511). In accordance with the character string obtained as a result of the conversion, the voice response server 14 conducts semantic analysis so as to determine the meaning of the user's request (step S512). In accordance with the voice data, the voice response server 14 conducts sentiment analysis to estimate the sentiment of the user when the user has uttered the request (step S513). The voice recognition, semantic analysis, and sentiment analysis may be conducted using known methods and will thus not be described in detail. Information indicative of the tone and/or speed of a voice, for example, may be used for the sentiment analysis.

In accordance with the results of the semantic analysis and sentiment analysis, the voice response server 14 determines whether it is necessary to make an inquiry to the management server 30 (step S514). When the user has made a request about general information, such as a weather forecast or traffic information, for example, the voice response server 14 determines that an inquiry to the management server 30 is unnecessary.

Upon determination that an inquiry to the management server 30 is unnecessary, the voice response server 14 collects information from, for example, a WEB service through a network so as to create voice data for a response to the user. The voice response server 14 transmits the voice data to the smart speaker 20, so that the smart speaker 20 outputs the response in the form of a voice. Processes to be performed by the voice response server 14 when no inquiry is made to the management server 30 are known and will thus not be described in detail.

When the user has made a request about restaurants near the lodging facility, for example, the voice response server 14 determines that an inquiry to the management server 30 is necessary. The voice response server 14 transmits, to the management server 30, the user's request and sentiment obtained by analyzing voice data, an image captured by the camera 28, and the speaker ID (step S521).

Processes to be performed upon determination that an inquiry to the management server 30 is necessary will be briefly described below. The details of the processes surrounded by the broken line will be described later.

In accordance with the speaker ID, the CPU 31 sequentially searches the speaker DB 41 and the PMSDB so as to acquire the attributes of the user (step S522). When two or more persons stay in the same room, the CPU 31 determines the user, who is an utterer, in accordance with the image captured by the camera 28.

The CPU 31 inputs the user's attributes, request, and sentiment to the recommendation model 48 (which has been described with reference to FIG. 6) so as to acquire the introduced facility IDs and scores of facilities to be introduced to the user (step S523). The CPU 31 extracts a predetermined number of introduced facility IDs in accordance with the scores, for example. The predetermined number is desirably about three. This is because the user does not have the pleasure of making a choice if only one facility is introduced, and rather feels a burden if too may facilities are introduced.

Using the introduced facility IDs as keys, the CPU 31 searches the introduced facility DB 42 so as to extract records. The CPU 31 transmits information (such as the URLs of facilities to be introduced to the user) to the voice response server 14 (step S524). The information, such as the URLs of facilities to be introduced to the user, is exemplary product/service information output from the CPU 31.

In accordance with predetermined condition(s), the CPU 31 may select the introduced facility IDs of introduced facilities (which are to be introduced to the user) from, for example, the introduced facility IDs acquired from the recommendation model 48. When there is information concerning an introduced facility where a campaign that is not reflected in the recommendation model 48 is underway, for example, the CPU 31 may preferentially introduce such a facility to the user.

In accordance with the information received, the voice response server 14 creates a natural voice response (step S531). The voice response server 14 transmits voice data for the response and the URLs of facilities (which are to be introduced) to the smart speaker 20 (step S532).

In accordance with the URLs received, the CPU 21 presents an image on the touch screen 25 and outputs a voice from the speaker 27 (step S533). The user operates the touch screen 25 so as to make comparisons between pieces of information on the introduced facilities. In response to an instruction from the user, the CPU 21 may perform processes, such as reading the information presented on the touch screen 25 and presenting linked WEB sites.

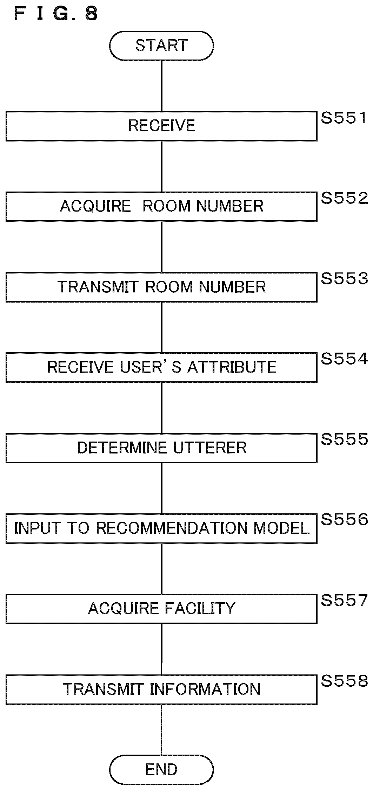

FIG. 8 is a flow chart illustrating a processing procedure of the program. Referring to FIG. 8, the processing procedure to be executed by the CPU 31 in the section surrounded by the broken line in FIG. 7 will be described in further detail.

The CPU 31 receives the request from the user, the user's sentiment, and the speaker ID transmitted from the voice response server 14 in step S521 (step S551). Using the received speaker ID as a key, the CPU 31 searches the speaker DB 41 so as to acquire a lodging facility name and a room number at which the smart speaker 20 is installed (step S552).

The CPU 31 transmits the lodging facility name and the room number to the PMS server 15 so as to make a request for the user's attributes (step S553). The CPU 31 receives the user's attributes from the PMS server 15 (step S554).

In accordance with image data captured by the camera 28, the CPU 31 conducts facial recognition on a captured person so as to estimate, for example, his or her age and gender. In accordance with, for example, the user's attributes received in step S554 and the age and gender estimated, the CPU 31 determines the attributes of the utterer (step S555).

A specific example will be described. Suppose that the guests are husband and wife, and the person who utters to the smart speaker 20 is a woman by appearance. In this case, the CPU 31 determines that the utterer is female in gender. When the representative registered in the PMSDB is a man, the CPU 31 determines that the utterer is the representative's wife. When the guest is a man staying by himself, the CPU 31 determines that irrespective of the appearance of the person who utters to the smart speaker 20, the utterer is male in gender and is the representative himself registered in the PMSDB. The CPU 31 may determine the attributes of the utterer by a combination of an image captured by the camera 28 and the quality of a voice acquired through the speaker 27.

The CPU 31 inputs the user's request and sentiment (which have been received in step S551) and the utterer's attributes (which have been estimated in step S555) to the recommendation model 48 (step S556).

The CPU 31 acquires the introduced facility IDs and the scores thereof output from the recommendation model 48 (step S557). The CPU 31 extracts a predetermined number of the introduced facility IDs in accordance with the scores, for example. Using the introduced facility IDs as keys, the CPU 31 searches the introduced facility DB 42 so as to extract records. The CPU 31 transmits information (such as the URLs of facilities to be introduced to the user) to the voice response server 14 (step S558). The information, such as the URLs of facilities to be introduced to the user, is exemplary product/service information output from the CPU 31.

The present embodiment is able to provide the information processing system 10 configured to, through the smart speaker 20 installed in a guest room of a lodging facility, make a response suitable to the attributes of a user who uses the guest room. The use of the smart speaker 20 enables the user to easily make a request for information by natural language. If the user is not good at, for example, operating an information device, such as a smartphone or a personal computer, the user would be able to use the smart speaker 20 by uttering a voice without feeling any reluctance.

Facilities to be introduced to the user are extracted using the recommendation model 48 and the introduced facility DB 42 prepared in advance by the lodging facility. This makes it possible to provide the information processing system 10 that guides guests who do not have much local knowledge to safe facilities.

The present embodiment is able to provide the information processing system 10 that introduces facilities suitable to the attributes of the user just like an experienced concierge by using the recommendation model 48. The present embodiment is able to provide the information processing system 10 that acquires the user's attributes from the PMS server 15 so as to save the user the trouble of entering his or her preferences or restrictive conditions by himself or herself.

The present embodiment is able to provide the information processing system 10 that determines, for each response, the attributes of an utterer in accordance with information recorded in the PMS and an image captured by the camera 28 and would thus make a response suitable to the attributes of the user who has made a request, if two or more guests are staying in the same room. When the guest room is a single room, the CPU 31 may store the user's attributes (which have been received in step S554) in the auxiliary storage device 33 such that the user's attributes are associated with the room number, and may thereafter skip step S553 and step S554 until the time of check-out.

The voice response server 14 is desirably able to process a plurality of languages. When the user has made a request in Russian, for example, a response is made in Russian, enabling Russian-speaking guests to easily obtain information. The voice response server 14 may automatically translate a voice in cooperation with an external translation service through a network, for example.

The CPU 31 adds data, which indicates that the utterer speaks Russian, to the input data that is input to the recommendation model 48 in step S556. This makes it possible to acquire information suitable for the Russian-speaking user in step S557. Machine translation, for example, is desirably used to convert text in an image presented on the touch screen 25 into Russian.

The present embodiment is able to provide the information processing system 10 capable of handling not only major foreign languages, such as English and Chinese, but also many other foreign languages by carrying out the processes described above. Guests from foreign countries are thus able to easily obtain information using languages they feel comfortable with.

The image captured by the camera 28 may be transmitted from the smart speaker 20 to the management server 30 without involvement of the voice response server 14. This makes it possible to reduce the amount of communication traffic.

The smart speaker 20 does not necessarily have to be provided with the camera 28. If the smart speaker 20 is not provided with the camera 28, the CPU 31 would be able to determine the utterer in accordance with the voice quality of the user in step S555. The smart speaker 20 does not necessarily have to be provided with the display unit 251. If the smart speaker 20 is not provided with the display unit 251, the smart speaker 20 would provide information to the user and receive the user's operations by only voice.

When facilities sufficiently suitable for the user's request are not recorded in the introduced facility DB 42 or in response to the user's desire, the CPU 31 may conduct, for example, a WEB search so as to extract facilities to be introduced to the user and may cause the smart speaker 20 to output a result of the extraction. In this case, the CPU 31 may acquire information from, for example, an affiliated site that introduces restaurants and may cause the smart speaker 20 to output the information. The CPU 31 may cause the smart speaker 20 to output information (e.g., advertisement information) on the facilities.

### Embodiment 2

This embodiment relates to the information processing system 10 that accepts a reservation for a facility introduced. Features of Embodiment 2 similar to those of Embodiment 1 will not be described.

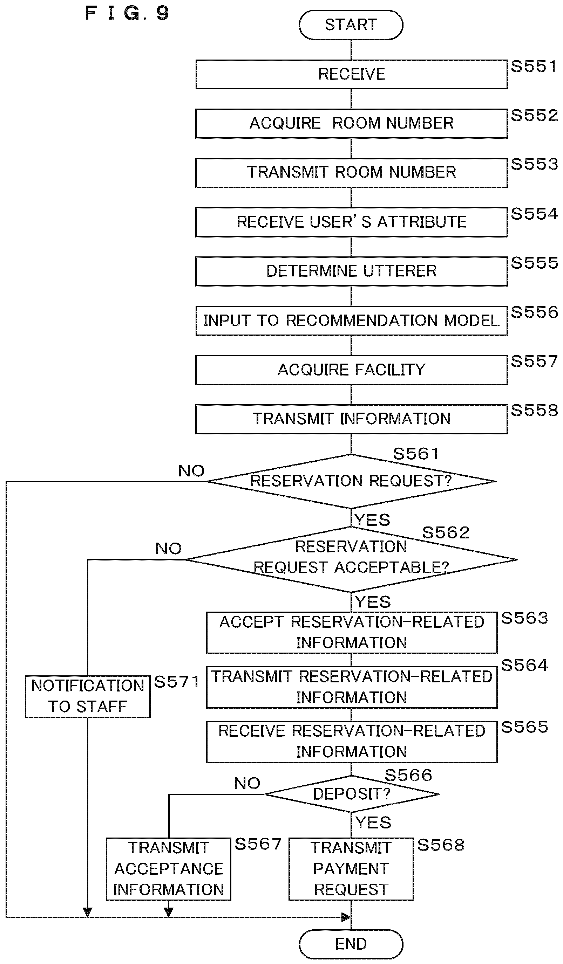

FIG. 9 is a flow chart illustrating a processing procedure of a program according to Embodiment 2. Processes to be performed until step S558 are identical to those in the processing procedure in Embodiment 1 described with reference to FIG. 8 and will thus not be described.

The CPU 31 determines whether the CPU 31 has accepted a reservation request for a facility introduced to a user through the smart speaker 20 (step S561). The CPU 31 accepts a reservation request when the user has selected, for example, a reservation button presented on the touch screen 25. The CPU 31 may accept a reservation request by voice through the voice response server 14 and the smart speaker 20.

Upon determination that no reservation request has been accepted (i.e., if the answer is NO in step S561), the CPU 31 then ends the procedure. Upon determination that a reservation request has been accepted (i.e., if the answer is YES in step S561), the CPU 31 determines whether a facility for which the user has made a reservation request is able to take online reservations (step S562).

Upon determination that the facility is unable to take online reservations (i.e., if the answer is NO in step S562), the CPU 31 provides notification to the staff of the lodging facility about the fact that the guest has made a request for a reservation and about the target facility (step S571). The notification is presented, for example, on the screen of a personal computer installed at the front desk. The staff of the lodging facility provides a "concierge service", such as making a reservation for the facility on behalf of the user. The CPU 31 then ends the procedure.

Upon determination that the facility is able to take online reservations (i.e., if the answer is YES in step S562), the CPU 31 receives reservation-related detailed information from the user through the smart speaker 20 (step S563). In one example, the CPU 21 causes the touch screen 25 to present an entry form (which receives entry of data, such as a reservation time and the number of people) so as to receive an entry by the user. The CPU 21 may have a conversation with the user through a chatbot so as to receive reservation-related detailed information.

The CPU 31 transmits the reservation-related detailed information to the facility (for which a reservation is to be made) or a reservation site (step S564). The CPU 31 receives acceptance information, such as a reservation number indicating that a reservation has been accepted (step S565).

The CPU 31 determines whether advance payment of a deposit is necessary (step S566). Information indicative of whether a deposit is necessary is included in the acceptance information received in step S565, for example. Information indicative of whether a deposit is necessary may be included in the introduced facility DB 42.

Upon determination that advance payment of a deposit is unnecessary (i.e., if the answer is NO in step S566), the CPU 31 transmits the acceptance information to the smart speaker 20 (step S567). The CPU 31 then ends the procedure.

The acceptance information is presented on the touch screen 25 or output from the speaker 27. The CPU 31 may acquire the mail address or messenger ID of the user in step S563 and may output the acceptance information by e-mail or messenger. The CPU 31 may acquire the telephone number of the user in step S563 and may output the acceptance information by short message service (SMS).

Upon determination that advance payment of a deposit is necessary (i.e., if the answer is YES in step S566), the CPU 31 transmits the acceptance information and payment request to the smart speaker 20 (step S568). The CPU 31 then ends the procedure.

Payment of a deposit is made using, for example, a two-dimensional bar code for payment, which is acquired from an online payment company. In accordance with the payment request transmitted in step S568, the CPU 31 causes the touch screen 25 to present the two-dimensional bar code. The user captures an image of the bar code by his or her smartphone, for example, and performs a predetermined operation so as to make a payment.

In accordance with the payment request transmitted in step S568, the CPU 31 may cause the touch screen 25 to present a request that prompts the user to hold the two-dimensional code for payment toward the camera 28. The CPU 31 transmits the two-dimensional code (which has been captured by the camera 28) to an online payment company, so that a payment is made.

The CPU 31 may output a screen through which a payment is to be made to a credit card company, and may receive an entry by the user. The CPU 31 may output a confirmation screen for payment of a deposit (which is charged to the room) to the touch screen 25.

When a deposit is not paid within a predetermined period of time, the facility that has accepted a reservation cancels the reservation, or the staff of the lodging facility, for example, checks with the user.

The present embodiment is able to provide the information processing system 10 that enables the user to easily make a reservation for a facility introduced through the smart speaker 20. If the facility does not have an online reservation system (e.g., if the facility is a local privately-run store), notification is made to the staff of the lodging facility so as to provide a reservation service to the user.

### Embodiment 3

This embodiment relates to the information processing system 10 that records a history of guidance to a user and calculates an introducing fee for an introduced facility and expenses (such as a rebate, a gratuity, and a reward) to be paid to a lodging facility at which the smart speakers 20 are installed. In the following description, a rebate is used as a specific example. Features of Embodiment 3 similar to those of Embodiment 2 will not be described.

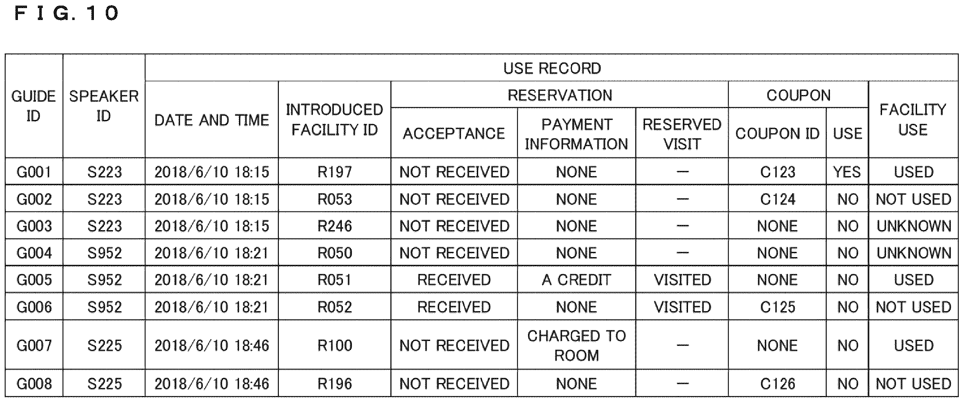

FIG. 10 is a diagram illustrating a record layout of a guide history DB. The guide history DB is a DB recorded in the auxiliary storage device 33. The guide history DB may be recorded in an external mass storage device connected to the management server 30 or in a different server connected through a network to the management server 30.

The guide history DB is a DB that records speakers ID, guide information output from the smart speakers 20 to which the speaker IDs are assigned, and data indicative of whether users have used facilities, such that the speaker IDs, the guide information, and the data are associated with each other. The guide history DB includes a guide ID field, a speaker ID field, and a use record field. The use record field includes a date and time field, an introduced facility ID field, a reservation field, a coupon field, and a facility use field. The reservation field includes an acceptance field, a payment information field, and a reserved visit field. The coupon field includes a coupon ID field and a use field.

The guide ID field records guide IDs uniquely assigned to guides provided from the smart speakers 20. The speaker ID field records speaker IDs. The date and time field records the dates and times when the CPU 31 has transmitted information concerning introduced facilities (which are to be introduced to users) in step S558 illustrated in FIGS. 8 and 9. The introduced facility ID field records introduced facility IDs.

The acceptance field records whether a reservation request has been received from a user. "Received" indicates that a reservation request has been received. "Not Received" indicates that no reservation request has been received. When a reservation request has been received from a user but a reservation has not been booked, the acceptance field records "Not Booked".

The payment information field records payment information obtained when a user has paid a deposit at the time of making a reservation. The payment information is information on an account number for a credit card or an online payment service, for example. "Charged To Room" indicates that a user pays a fee together with a room charge.

The reserved visit field records whether a user who had made a reservation has visited the place. "Visited" indicates that a user who had made a reservation has visited the place at the reserved time. The sign "-" indicates that no reservation has been accepted. When a user who had made a reservation has not visited the place, the reserved visit field records "Cancellation Without Notification". Information recorded in the reserved visit field is exemplary information indicative of a reservation-related user's use record.

The coupon ID field records coupon IDs each uniquely assigned to a coupon issued when a user is guided to a facility. The coupon is presented in the form of a two-dimensional bar code (which includes, for example, information concerning the coupon ID) on the touch screen 25. The user captures an image of the two-dimensional bar code with his or her smartphone, for example, so as to acquire the coupon presented.

The coupon may be output from a printer installed in a guest room. The coupon may be output from a printer installed at the front desk and may be handed from the staff at the front desk to the user when the user goes out. The use field records whether the issued coupon has been used.

The facility use field records whether a user has used a facility. "Used" indicates that a user has used a facility. "Not Used" indicates that a user has not used a facility. "Unknown" indicates that whether a user has used a facility is undeterminable. When a user has actually gone to a facility for which the user has made a reservation, for example, "Used" is recorded in response to a notification from the facility. "Used" may be automatically recorded upon acceptance of a reservation, and "Used" may be changed to "Not Used" upon reception of an inquiry from a facility about the fact that a user has not come.

When an issued coupon has been used, "Used" is recorded in the facility use field in response to a notification from, for example, a facility or a coupon management company. A system for issuing a coupon in the form of a two-dimensional bar code and acquiring a use status in response to an operation performed on a smartphone is known and will thus not be described in detail.

When no reservation is made or no coupon is issued, it is impossible to determine whether a user has used the facility, so that "Unknown" is recorded in the facility use field. Alternatively, a user may be asked to fill out a questionnaire, and "Used" or "Not Used" may be recorded in the facility use field in accordance with the result of the questionnaire. A person in charge at the front desk may record "Used" or "Not Used" in the facility use field on the basis of, for example, a chat the person in charge has had with the user when the user has returned to the lodging facility.

Information recorded in the subfields of the use record field is exemplary information concerning a record of use of the information processing system 10.

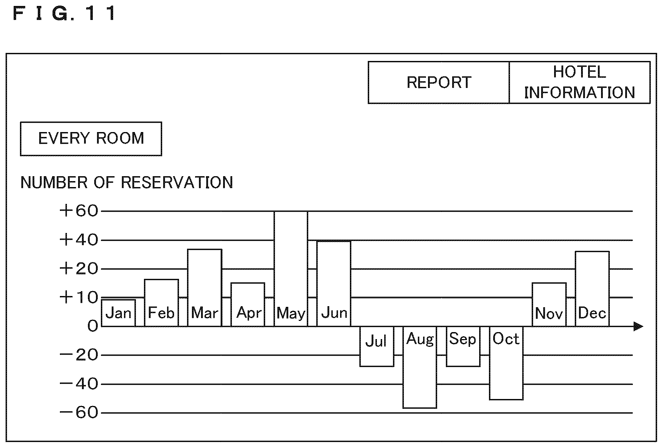

FIG. 11 is a diagram illustrating an exemplary report screen. FIG. 11 illustrates an exemplary report based on the guide history DB described with reference to FIG. 10. The horizontal axis represents months, and the vertical axis represents differences between the numbers of reservations and target numbers. The report illustrated in FIG. 11 is given by way of example. A user may use, for example, general-purpose spreadsheet software so as to create a report with a desired graph. Software to automatically create a report in a predetermined format may be used.

Guest attributes may be acquired in accordance with, for example, speaker IDs recorded in the speaker ID field of the guide history DB so as to create a report in which data is classified for each attribute, such as guests' ages, guests' nationalities, or the numbers of companions.

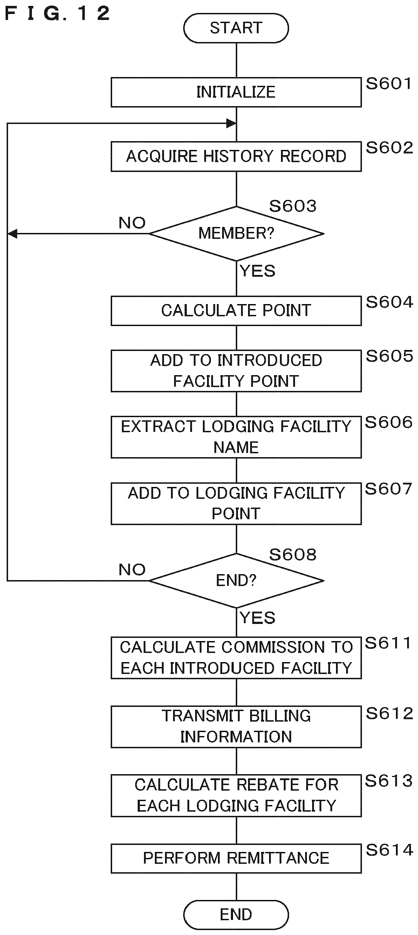

FIG. 12 is a flow chart illustrating a processing procedure of a program according to Embodiment 3. The program illustrated in FIG. 12 is executed at predetermined point calculation intervals (e.g., once a month).

The CPU 31 performs an initialization that involves setting the initial values of an introduced facility point and a lodging facility point to zero (step S601). The CPU 31 acquires a single history record from the history DB (step S602). In this step, the CPU 31 acquires a record in which dates and times within a predetermined point calculation interval are recorded in the date and time field.

Using, as keys, the introduced facility IDs recorded in the introduced facility ID field in the history record, the CPU 31 searches the introduced facility DB 42 and makes reference to the membership field in the extracted record so as to determine whether a user holds membership (step S603).

Upon determination that the user holds membership (i.e., if the answer is YES in step S603), the CPU 31 calculates a point for the record acquired in step S602 (step S604). The point is calculated by giving a score to each item. For example, a score of 1 is given for presentation on the touch screen 25, a score of 1 is given for issuance of a coupon, a score of 1 is given for use of a coupon, a score of 3 is given for acceptance of a reservation request, and a score of 2 is given for advance payment.

The CPU 31 adds the calculated point to an introduced facility point for an introduced facility recorded in the introduced facility ID field of the history record acquired in step S602 (step S605).

Using, as a key, the speaker ID recorded in the speaker ID field of the record acquired in step S602, the CPU 31 searches the speaker DB 41 and extracts a record therefrom so as to extract a lodging facility name recorded in the lodging facility name field (step S606). The CPU 31 adds the lodging facility point to a lodging facility point for the lodging facility name extracted (step S607).

The lodging facility point is calculated at a fixed rate, such as 10% of the point calculated in step S604, for example. The lodging facility point may be calculated using any other function or constant. The lodging facility point may be calculated for each lodging facility or may be calculated for each group (e.g., for any group, such as a lodging facility chain group).

The CPU 31 determines whether the processing of the history record has ended (step S608). Upon determination that the processing of the history record during a predetermined point calculation interval has not ended (i.e., if the answer is NO in step S608) or upon determination that the user does not hold membership (i.e., if the answer is NO in step S603), the CPU 31 returns the procedure to step S602.

Upon determination that the processing of the history record during the predetermined point calculation interval has ended (i.e., if the answer is YES in step S608), the CPU 31 calculates a commission charged to each introduced facility in accordance with the introduced facility point (step S611). The commission is calculated such that 1 point = 1 yen, for example. The commission may be fixed at a predetermined amount when the commission exceeds a predetermined point, for example. Alternatively, the commission may be set in accordance with any rule; for example, the commission may be free of charge until the commission reaches a predetermined point.

The commission is an example of a fee to be paid by a facility introduced to a guest through the information processing system 10. The fee is not limited to the commission but may be, for example, a system usage fee, a system management fee, or an introducing fee.

The CPU 31 transmits billing information for each introduced facility (step S612). The transmission of billing information may involve transmitting a bill to a person in charge at each introduced facility or may involve transmitting a billing amount to a payment company, such as a credit card company. The CPU 31 may transmit billing information to the management staff of the information processing system 10, and the management staff may issue and send a bill.

In accordance with the lodging facility point, the CPU 31 calculates a rebate to be paid to each lodging facility at which the smart speakers 20 are installed in guest rooms (step S613). The rebate may be calculated such that 1 point = 0.01 yen, for example. The rebate increases in amount for each point when the rebate exceeds a predetermined point, for example. Alternatively, the rebate may be calculated in accordance with any rule; for example, the rebate may be set to zero when the rebate does not reach a predetermined point.

The CPU 31 performs a rebate remittance process (step S614). The remittance process involves, for example, providing a remittance instruction to a predetermined financial institution. The CPU 31 may transmit remittance information to the management staff of the information processing system 10, and the management staff may carry out a rebate remittance proceeding. The CPU 31 then ends the procedure.

The present embodiment is able to provide the information processing system 10 that automatically calculates a commission, which is to be charged to an introduced facility in accordance with the number of introductions, and charges the commission to the introduced facility. The present embodiment is able to provide the information processing system 10 that automatically calculates a rebate for a lodging facility at which the smart speakers 20 are installed, and carries out a payment process.

The recommendation model 48 may be updated by conducting machine learning using, as teaching data, the details of guidance recorded in the guide history DB, the attributes of users to which guidance is output, and data indicative of whether the users have used facilities. Appropriately updating the recommendation model 48 makes it possible to provide the information processing system 10 that is capable of coping with, for example, changes in trends.

### Embodiment 4

This embodiment relates to the information processing system 10 that controls the environments of interiors of guest rooms in accordance with voices acquired from the smart speakers 20 and the attributes of guests. Features of Embodiment 4 similar to those of Embodiment 1 will not be described.

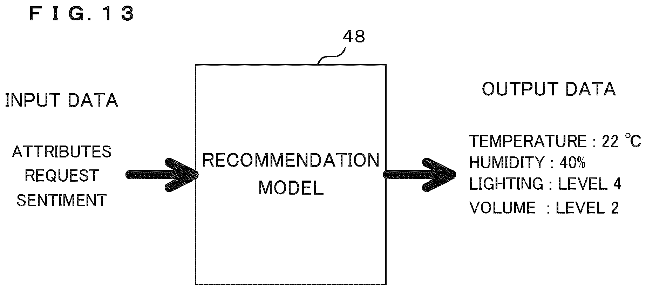

FIG. 13 is a diagram schematically illustrating the recommendation model 48 according to Embodiment 4. Input data is, for example, a user's attributes, a user's instruction, and a user's sentiment guessed by analyzing a user's voice. The input data may include, for example, weather and traffic information. Output data may include, for example, the temperature, humidity, and lighting color and brightness of a guest room, and a guest room environment, such as the volume of a television set. In the present embodiment, these environments are controlled in response to an instruction from the CPU 21 or the CPU 31.

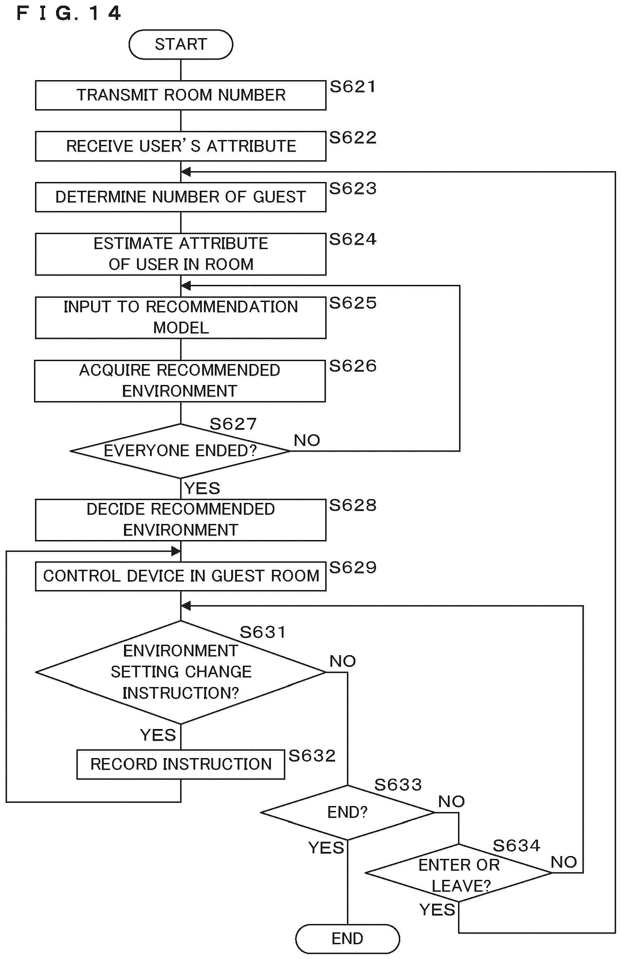

FIG. 14 is a flow chart illustrating a processing procedure of a program according to Embodiment 4. The program illustrated in FIG. 14 is executed for each guest room upon acceptance of a guest's check-in.

The CPU 31 transmits a lodging facility name and a room number to the PMS server 15 so as to make a request for a user's attributes (step S621). The CPU 31 receives the user's attributes from the PMS server 15 (step S622).

The CPU 31 determines the number of guests who have entered a guest room in accordance with the user's attributes and an image captured by the camera 28 (step S623). The CPU 31 may determine the number of guests in accordance with an output from a sensor (such as a human sensor) installed, for example, on the door of the guest room.

In accordance with the user's attributes, the number of users, and image data captured by the camera 28, the CPU 31 estimates the attributes of each of the users in the guest room (step S624). The CPU 31 inputs the attributes of one of the users (which have been estimated in step S624) to the recommendation model 48 (step S625). When the user's instruction and sentiment are acquired through the smart speaker 20 and the voice response server 14, the CPU 31 also inputs information on the user's instruction and sentiment to the recommendation model 48.

The CPU 31 acquires recommended environments output from the recommendation model 48 (step S626). The CPU 31 determines whether the processing of all of the guests in the room has ended (step S627). Upon determination that the processing has not yet ended (i.e., if the answer is NO in step S627), the CPU 31 returns the procedure to step S625.

Upon determination that the processing has ended (i.e., if the answer is YES in step S627), the CPU 31 decides a recommended environment for the guest room (step S628). In one example, the CPU 31 decides the recommended environment by taking the average of recommended environments for the respective users. The recommended environment for the guest room decided by the CPU 31 may be, for example, a recommended environment for the particular user, such as an infant. The CPU 31 controls a device in the guest room, such as an air conditioner, so as to adjust the conditions of the guest room to the recommended environment (step S629).

The CPU 31 determines whether an environment setting change has been received from the user through the smart speaker 20 and the voice response server 14 (step S631). Upon determination that the change has been received (i.e., if the answer is YES in step S631), the CPU 31 changes an environment setting in response to an instruction from the user. The CPU 31 records the received instruction in the auxiliary storage device 33 (step S632). The CPU 31 then returns the procedure to step S629.

Upon determination that the change has not been received (i.e., if the answer is NO in step S631), the CPU 31 determines whether the procedure is to be brought to an end (step S633). Upon acceptance of a check-out, for example, the CPU 31 determines that the procedure is to be brought to an end. Upon determination that the procedure is to be brought to an end (i.e., if the answer is YES in step S633), the CPU 31 ends the procedure.

Upon determination that the procedure is not to be brought to an end (i.e., if the answer is NO in step S633), the CPU 31 determines whether anyone has entered or left the guest room (step S634). The CPU 31 determines whether anyone has entered or left the guest room in accordance with an image captured by the camera 28 and a voice acquired through the speaker 27. The CPU 31 may determine whether anyone has entered or left the guest room in accordance with an output from a sensor (such as a human sensor) installed, for example, on the door of the guest room.

Upon determination that no one has entered or left the room (i.e., if the answer is NO in step S634), the CPU 31 returns the procedure to step S631. Upon determination that someone has entered or left the room (i.e., if the answer is YES in step S634), the CPU 31 returns the procedure to step S623.

The present embodiment is able to provide the information processing system 10 that automatically controls the environment of a guest room in accordance with a guest's attributes. When a guest from a country where people like setting air conditioners at low temperatures, for example, has checked in, the CPU 31 immediately sets the air conditioner at a low temperature. Thus, using the time taken for the guest to arrive in a guest room, the information processing system 10 is able to set the environment of the guest room such that the conditions of the guest room suit the preference of the guest.

### Embodiment 5

This embodiment relates to the information processing system 10 that is usable at a place other than guest rooms (e.g., the front desk of a lodging facility). Features of Embodiment 5 similar to those of Embodiment 1 will not be described.

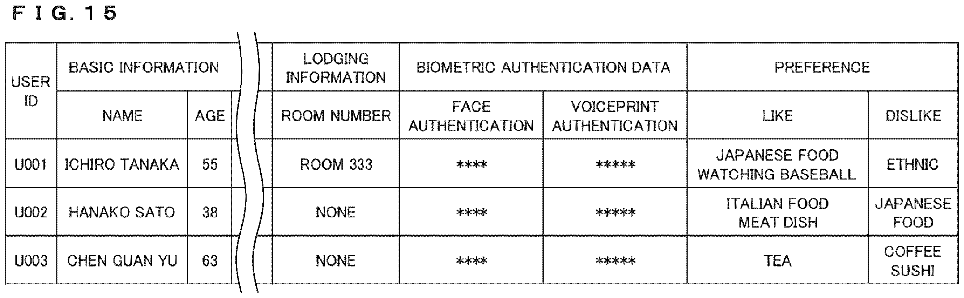

FIG. 15 is a diagram illustrating a record layout of a user DB. The user DB is a DB recorded in the auxiliary storage device 33. The user DB may be recorded in an external mass storage device connected to the management server 30 or in a different server connected through a network to the management server 30.

The user DB is a DB that records user IDs uniquely assigned to users, basic information, lodging information, biometric authentication data, and users' preferences such that these pieces of information are associated with each other. The user DB records information on, for example, users who have used a lodging facility in the past, in addition to information on users staying at the lodging facility.

The user DB includes a user ID field, a basic information field, a lodging information field, a biometric authentication data field, and a preference field. The basic information field includes subfields, such as a name field and an age field. The lodging information field includes a room number field. When the user DB is available for shared use by, for example, a lodging facility chain including many lodging facilities, the lodging information field includes a lodging facility name field.

The biometric authentication data field includes a face authentication field and a voiceprint authentication field. The biometric authentication data field may further include, for example, an iris authentication field and a fingerprint authentication field. The preference field includes a like field and a dislike field.

The user ID field records user IDs uniquely assigned to users. The subfields of the basic information field record user-related basic information, such as users' names and ages. The room number field records room numbers for rooms where users are staying. For users not staying, "Not Staying" is recorded in the room number field.

The face authentication field records face authentication data for use in identifying users in accordance with images captured by the camera 28. The voiceprint authentication field records voiceprint authentication data for use in identifying users in accordance with voices acquired by the microphones 26.

The like field records users' likes acquired from, for example, questionnaires filled out by users or requests made by users in the past. The dislike field records users' dislikes acquired from, for example, questionnaires filled out by users or requests made by users in the past.

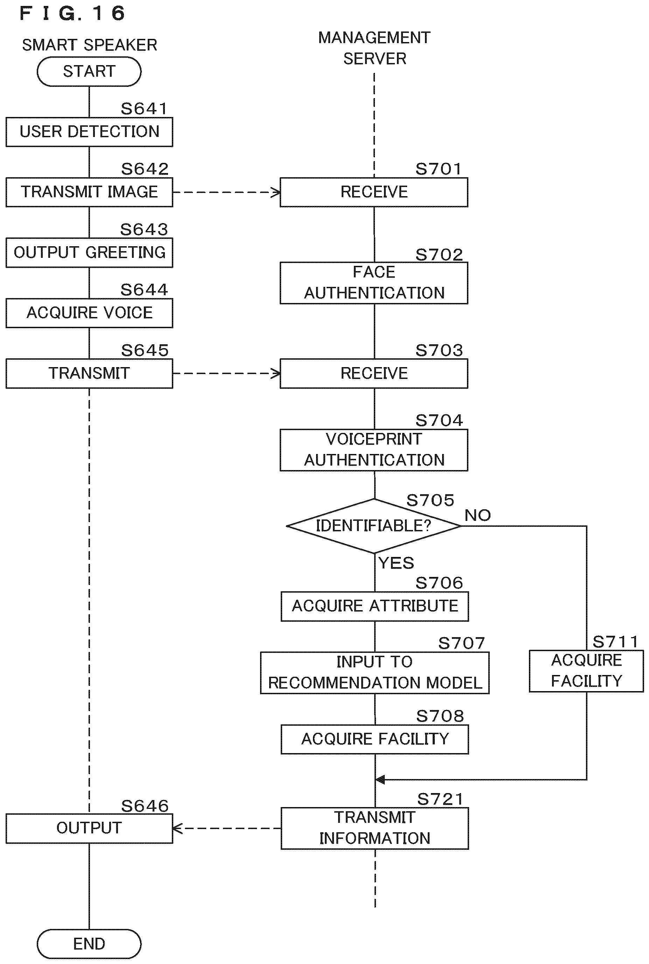

FIG. 16 is a flow chart illustrating a processing procedure of a program according to Embodiment 5. In FIG. 16, processes to be performed by the voice response server 14 are not illustrated. The CPU 21 detects the approach of a user in accordance with an image captured by the camera 28 (step S641). The CPU 21 transmits the image (which has been captured by the camera 28) to the management server 30 (step S642).

The CPU 31 receives the image (step S701). The CPU 31 detects the user's face included in the image. The CPU 31 performs face authentication in accordance with the face detected and face authentication information recorded in the face authentication field of the user DB (step S702).

The CPU 21 outputs a greeting (e.g., "Hello, Is There Any Place You Would Like To Go To?") from the speaker 27 (step S643). The CPU 21 acquires a voice uttered by the user (step S644). The CPU 21 transmits voice data to the management server 30 through the voice response server 14 (step S645).

The CPU 31 receives the voice data and the user's request and sentiment analyzed by the voice response server 14 (step S703). The CPU 31 performs voiceprint authentication in accordance with the voice data and voiceprint authentication information recorded in the voiceprint authentication field of the user DB (step S704).

In accordance with the face authentication performed in step S702 and the voiceprint authentication performed in step S704, the CPU 31 determines whether the user is identifiable (step S705). The CPU 31 determines that the user is identifiable, for example, when a face authentication result corresponds to a voiceprint authentication result. The CPU 31 determines that the user is identifiable also when either one of the face authentication and the voiceprint authentication has been successful with high accuracy.

The CPU 31 may acquire a room number from a room key held toward the camera 28 by the user. In this case, the CPU 31 is able to identify the number of the room where the user is staying without using the user DB. The CPU 31 may determine whether the room number (which has been acquired from the room key) corresponds to the face authentication result or voice authentication result for the user. When the room number does not correspond to the authentication result, the CPU 31 notifies the staff of the lodging facility about this fact, because a suspicious person may have the room key.

Upon determination that the user has been identified successfully (i.e., if the answer is YES in step S705), the CPU 31 acquires, from the PMS server 15, an attribute that is not recorded in the user DB, such as data indicative of whether the user has companion(s), in accordance with the room number recorded in the room number field of the user DB (step S706). The CPU 31 inputs, to the recommendation model 48, the user's request and sentiment received in step S703, the information recorded in the basic information field of the user DB, and the user's attribute acquired in step S706 (step S707). The CPU 31 acquires an introduced facility ID and a score output from the recommendation model 48 (step S708).

Upon determination that the user has not been identified successfully (i.e., if the answer is NO in step S705), the CPU 31 acquires information about a predetermined facility associated with the request received in step S703 (step S711). Upon end of step S708 or step S711, the CPU 31 transmits information (such as the URL of the facility to be introduced to the user) to the smart speaker 20 through the voice response server 14 (step S721).

The CPU 21 outputs a voice for guidance from the speaker 27 and presents an image on the touch screen 25 (step S646). The CPU 21 then ends the procedure. If the user is remaining in an area where the user is detectable by the smart speaker 20, the program described with reference to FIG. 16 will be executed again.

The present embodiment is able to provide the information processing system 10 that makes an appropriate response suitable also to the attributes of a user who is outside his or her guest room. Using the basic information field of the user DB makes it possible to provide the information processing system 10 that makes a response suitable also to the attributes of a user who is not recorded in the PMS because the user uses a facility, such as a restaurant, but does not stay at a lodging facility.

The present embodiment is able to provide the information processing system 10 that identifies users by face authentication and voiceprint authentication, thus performing personal authentication without making the users aware of the authentication.

The information processing system 10 may be used for the purpose of recommending, for example, dishes and wines to users in the restaurants of lodging facilities. In such a case, the recommendation model 48 outputs, for example, information about dishes and wines that may be served at the restaurants.

The information processing system 10 may provide information to a user through the smart speaker 20 installed, for example, at the home of the user, a workplace, a school, or a public institution. The present embodiment is able to provide the information processing system 10 that continuously provides services to a user after the user is recorded in the user DB, for example, upon use of a lodging facility.

### Embodiment 6

This embodiment relates to the information processing system 10 that controls a display device 56 installed in a guest room. Features of Embodiment 6 similar to those of Embodiment 1 will not be described.

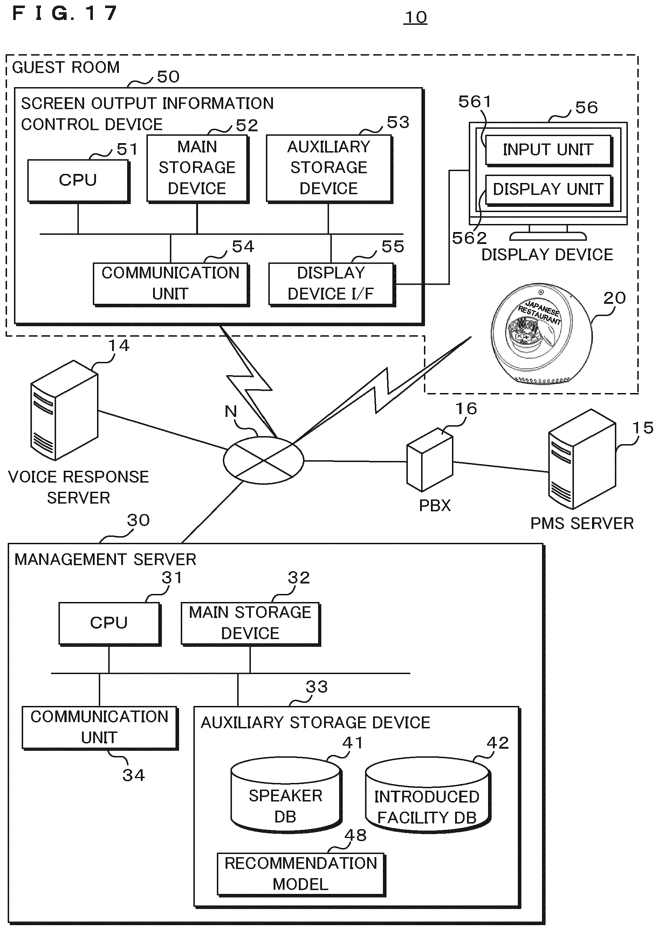

FIG. 17 is a diagram illustrating a configuration of the information processing system 10 according to Embodiment 6. The information processing system 10 includes a screen output information control device 50 and the display device 56 connected to the management server 30 through a network. The smart speaker 20, the screen output information control device 50, and the display device 56 are located in a guest room. The management server 30 is connected to the PMS server 15 through a private branch exchange (PBX) 16.

The screen output information control device 50 includes a CPU 51, a main storage device 52, an auxiliary storage device 53, a communication unit 54, a display device I/F 55, and a bus. The CPU 51 is an arithmetic and control unit to execute a program according to the present embodiment. A single or a plurality of CPUs or multicore CPUs, for example, may be used as the CPU 51. The CPU 51 is connected through the bus to hardware units included in the screen output information control device 50.

The main storage device 52 is a storage device, such as an SRAM, a DRAM, or a flash memory. The main storage device 52 temporarily stores information necessary in the course of processing by the CPU 51 and the program being executed by the CPU 51.

The auxiliary storage device 53 is a storage device, such as an SRAM, a flash memory, or a hard disk. The auxiliary storage device 53 stores the program to be executed by the CPU 51 and various data necessary for execution of the program.

The communication unit 54 is an interface through which data communication between the screen output information control device 50 and the network is carried out. The display device I/F 55 is an interface through which the screen output information control device 50 is connected to the display device 56. The connection between the display device I/F 55 and the display device 56 may be a wired connection or may be a wireless connection.

The screen output information control device 50 is a general-purpose information processing device, such as a personal computer, a tablet, or a smartphone. The screen output information control device 50 may be an information processing device dedicated to the information processing system 10. The display device 56 and the screen output information control device 50 may be integral with each other. The display device 56, the screen output information control device 50, and the smart speaker 20 may be integral with each other.

The display device 56 is a "touch screen display" in which a display unit 562 and an input unit 561 are stacked. The display device 56 is, for example, a liquid crystal display device or an organic electro-luminescence display device, and includes the display unit 562 larger than the touch screen 25. The display device 56 may also serve as a television set.

The PBX 16 is a switchboard to control extensions in a lodging facility and control, for example, connections with outside lines. The management server 30 transmits a signal to the PBX 16 in accordance with a predetermined protocol so as to acquire information from the PMS server 15 through the PBX 16.

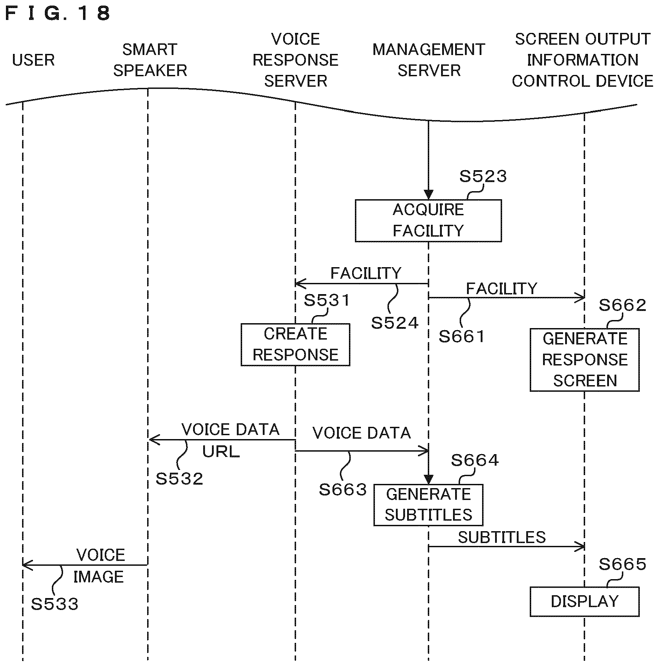

FIG. 18 is a sequence diagram schematically illustrating how the information processing system 10 according to Embodiment 6 operates. Operations to be performed until step S523 are similar to those described with reference to FIG. 7 and will thus not be illustrated.

The CPU 31 inputs a guest's attributes, request, and sentiment to the recommendation model 48 so as to acquire the introduced facility IDs and scores of facilities to be introduced to the guest (step S523).

Using the introduced facility IDs as keys, the CPU 31 searches the introduced facility DB 42 so as to extract a record. The CPU 31 transmits information (such as the URLs of facilities to be introduced to the guest) to the voice response server 14 (step S524). The CPU 31 transmits the information (such as the URLs of facilities to be introduced to the guest) to the screen output information control device 50 (step S661). Step S524 and step S661 may be carried out simultaneously, or one of step S524 and step S661 may be carried out before the other one of step S524 and step S661.

In accordance with the information received, the screen output information control device 50 generates a response screen on which information on the facilities to be introduced to the guest is appropriately laid out (step S662).

In accordance with the information received, the voice response server 14 creates a natural voice response (step S531). The voice response server 14 transmits, to the smart speaker 20, voice data for the response and the URLs of the facilities to be introduced (step S532). The voice response server 14 transmits the voice data for the response to the management server 30 (step S663).

In accordance with the voice data received, the CPU 31 generates subtitles for the voice data (step S664). The CPU 31 conducts semantic analysis on text created by voice recognition of the voice data, for example, and thus provides a summary of information in the voice data so as to generate the subtitles. Such a summary makes it possible to reduce the number of characters in the subtitles so as to provide the subtitles easily readable by a user.

The subtitles may be text provided by converting the voice data into textual information on an as-is basis. This enables the guest to check the same information with not only ears but also eyes.

The CPU 31 transmits the generated subtitles to the screen output information control device 50. The CPU 51 presents the guide screen (which has been generated in step S662) and the received subtitles on the display unit 562 (step S665).

The CPU 21 presents an image on the touch screen 25 in accordance with the URLs received, and outputs a voice from the speaker 27 (step S533). The guest operates the touch screen 25 or the input unit 561 so as to compare pieces of information on introduced facilities. In response to an instruction from the guest, the CPU 21 may perform processes, such as reading the information presented on the touch screen 25 and presenting linked WEB sites.

The voice response server 14 may generate both of the natural voice response and the subtitles (which are a summary of the response) in step S531. In such a case, the subtitles generated are transmitted to the screen output information control device 50 through the management server 30.

In step S663, the voice response server 14 may transmit text data (which is obtained by converting the voice data into text) instead of the voice data. In step S664, the CPU 31 conducts semantic analysis on the text data received and thus provides a summary of the text data so as to generate subtitles. Alternatively, the CPU 31 may use the received text data as subtitles on an as-is basis without providing a summary in step S664.

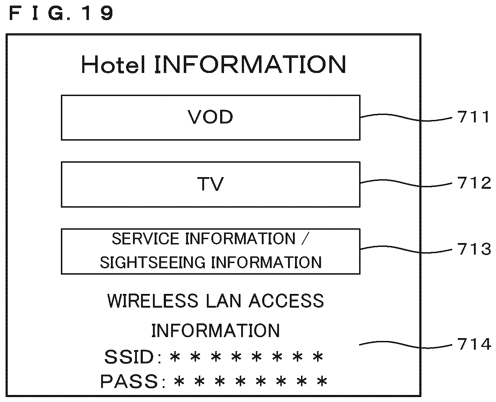

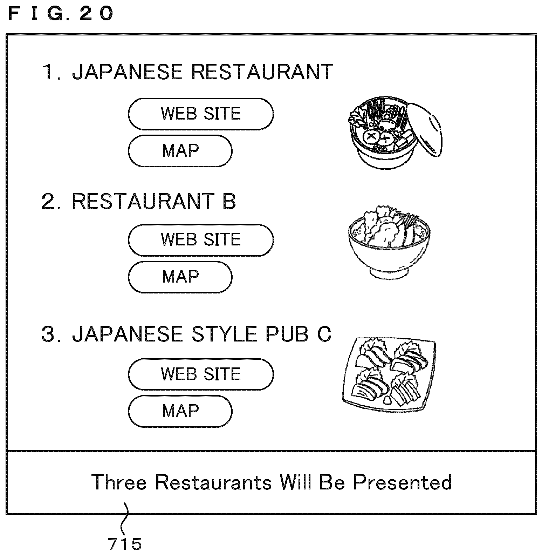

FIGS. 19 and 20 are diagrams each illustrating an exemplary screen presented on the display device 56. FIG. 19 illustrates an exemplary desktop screen presented when no particular operation is being performed by the guest. The desktop screen presents a video on demand (VOD) button 711, a television (TV) button 712, a service/sightseeing information button 713, and an access information section 714. The desktop screen may present, for example, a welcome message for the guest, and guidance for evacuation routes.

Upon selection of the VOD button 711 by the guest, the display device 56 presents an output provided from a VOD system (not illustrated). Upon selection of the TV button 712 by the guest, the display device 56 presents a television screen acquired through a tuner (not illustrated). Upon selection of the service/sightseeing information button 713 by the guest, the display device 56 presents a screen that provides: information, such as services available inside the building and neighborhood sightseeing information; and description of how to ask questions by voice through the smart speaker 20.

The access information section 714 presents information to be used when a device brought by the guest, such as a smartphone, is connected to a wireless local area network (LAN). The desktop screen may present, for example, a link to lodging clauses.

The CPU 51 desirably causes the display device 56 to present a screen that uses a language suitable for the attributes of the guest. The CPU 51 may decide the language, which is to be used, in accordance with the language used by the guest.

FIG. 20 illustrates a screen presented on the display device 56 when the smart speaker 20 is operating in response to a request "Show Me Japanese Restaurants" from the guest. The CPU 51 presents a list of Japanese restaurants recommended to the guest. The screen illustrated in FIG. 20 also presents buttons that provide links to the WEB sites of the restaurants, and buttons that provide links to the maps of the restaurants.

A subtitle section 715 is located in the lower portion of the screen illustrated in FIG. 20. The CPU 51 presents subtitles, which are associated with a voice coming from the smart speaker 20, in the subtitle section 715.

The guest is able to cause the display unit 562 to present information, such as maps showing the locations of the restaurants and the telephone numbers of the restaurants, by performing operations (such as tapping) on the input unit 561. Operations (such as tapping) performed on the display device 56 are similar to those performed on existing tablets, for example, and will thus not be described in detail.

The present embodiment involves using the display unit 562 in addition to the touch screen 25 so as to enable the guest to check introduced facilities on a large screen. Presenting the subtitle section 715 would enable the guest to check details of guidance if the guest fails to hear a voice coming from the smart speaker 20. The present embodiment is able to provide the information processing system 10 usable by guests who have hearing difficulties, for example.

The number of business operators that provide the PBX 16 is smaller than the number of business operators that provide the PMS server 15. Connecting the management server 30 to the PMS server 15 through the PBX 16 makes it possible to provide the information processing system 10 for which the number of types of protocols used for acquisition of information from the PMS server 15 is small.

### Embodiment 7

This embodiment relates to the information processing system 10 that recommends content, such as VOD programs and television programs, to a guest. Features of Embodiment 7 similar to those of Embodiment 6 will not described.

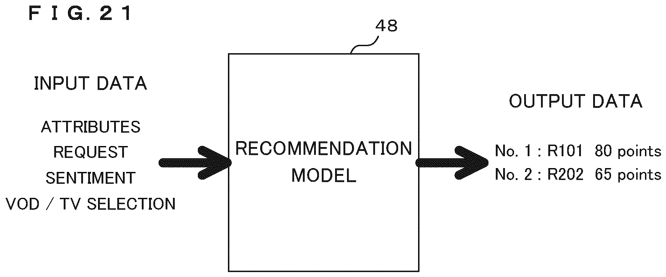

FIG. 21 is a diagram schematically illustrating the recommendation model 48 according to Embodiment 7. Input data is the guest's attributes, the guest's request, the guest's sentiment, and selection of VOD or TV by the guest. The guest is able to select VOD using the VOD button 711 or select TV using the TV button 712. The guest may select the VOD button 711 or the TV button 712 by voice through the smart speaker 20 instead of operating the display unit 562.

For content (such as movies and television programs) presentable on the display device 56, the recommendation model 48 outputs scores that indicate the levels of recommendation for the guest. When the VOD button 711, for example, is selected by the guest, the recommendation model 48 outputs high scores for content provided by a VOD system (not illustrated). When the TV button 712 is selected by the guest, the recommendation model 48 outputs high scores for viewable television programs.

When neither the VOD button 711 nor the TV button 712 is explicitly selected by the guest, the recommendation model 48 construes this state as selecting both of VOD and TV. The recommendation model 48 outputs scores indicating the levels of recommendation irrespective of whether content presentable on the display device 56 is content provided by the VOD system or viewable television programs. An output from the recommendation model 48 is exemplary information on how the display device 56 is to be controlled.

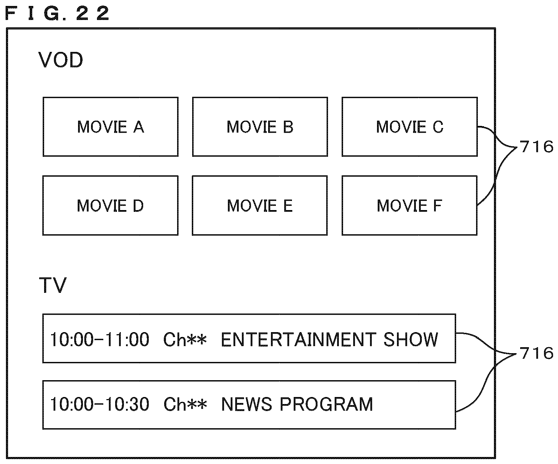

FIG. 22 is a diagram illustrating an exemplary screen presented on the display device 56 according to Embodiment 7. FIG. 22 illustrates an exemplary screen presented on the display device 56 by the CPU 51 when neither the VOD button 711 nor the TV button 712 is explicitly selected by the guest. The screen presents selection buttons 716 that indicate content for which the recommendation model 48 has output high scores.

Content-introducing information (such as the names, logos, genres, preview screens, introductory sentences, and broadcast times of respective pieces of content) is presented in the selection buttons 716. The guest is able to select content he or she wishes to view by looking at the content-introducing information.

The guest selects content he or she wishes to view by tapping the input unit 561 or by voice. The CPU 51 presents the selected content on the display device 56.

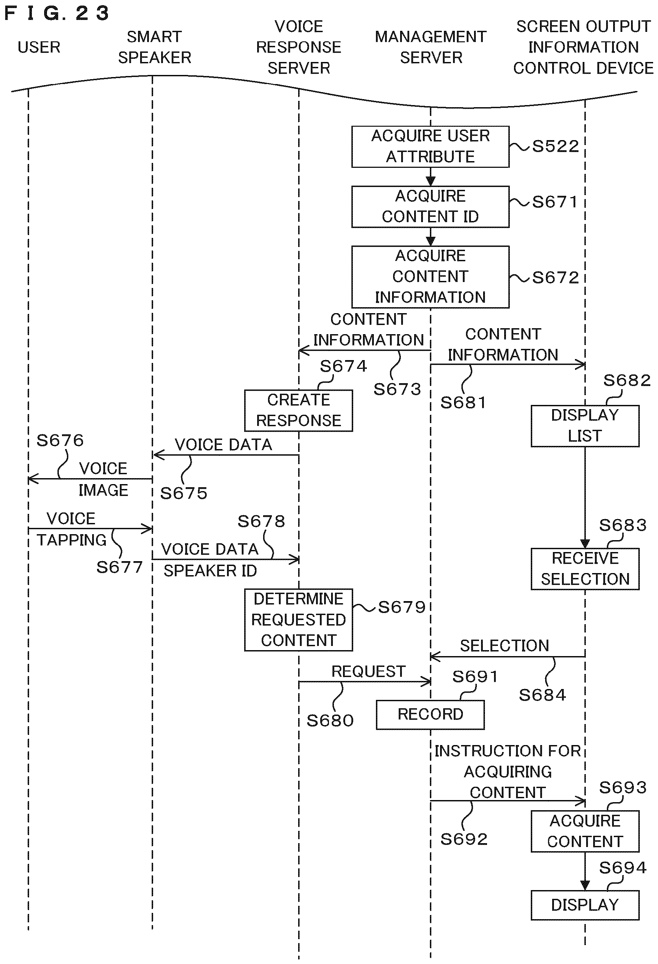

FIG. 23 is a sequence diagram schematically illustrating how the information processing system 10 according to Embodiment 7 operates. Operations to be performed until step S522 are similar to those described with reference to FIG. 7 and will thus not be illustrated.

The CPU 31 inputs, to the recommendation model 48, the guest's attributes, the guest's request, the guest's sentiment, and selection of VOD or TV by the guest, and acquires content IDs uniquely assigned to respective pieces of content to be introduced to the guest and the scores of the respective pieces of content (step S671).

The CPU 31 acquires, from a content server (not illustrated), information that introduces the content associated with the content IDs (step S672). The CPU 31 transmits the information (which introduces the content to the guest) to the voice response server 14 (step S673). The CPU 31 transmits the information (which introduces the content to the guest) to the screen output information control device 50 (step S681). Step S673 and step S681 may be carried out simultaneously, or one of step S673 and step S681 may be carried out before the other one of step S673 and step S681.

The CPU 51 presents a screen that provides a list of the content (which has been described with reference to FIG. 22 and which is to be introduced to the guest) on the display device 56 (step S682). The guest is thus able to select the content he or she wishes to view by looking at the content-introducing information. The CPU 51 receives selection(s) made by the user through the selection button(s) 716 (step S683). The CPU 51 transmits result(s) of the selection(s) made by the user to the management server 30 (step S684).

The voice response server 14 creates a natural voice response in accordance with the information received (step S674). The voice response server 14 transmits, to the smart speaker 20, voice data for the response and the URLs of facilities to be introduced (step S675).

The CPU 21 presents an image on the touch screen 25 in accordance with the URLs received, and outputs a voice from the speaker 27 (step S676). The guest operates the touch screen 25 or the input unit 561 so as to compare pieces of information on the introduced facilities. In response to an instruction from the guest, the CPU 21 may perform processes, such as reading the information presented on the touch screen 25 and presenting linked WEB sites.

When the user has selected content to be viewed by tapping the touch screen 25 or by voice, the CPU 21 receives the selection made by the user (step S677).

The CPU 21 transmits, to the voice response server 14, voice data obtained by converting the acquired voice into an electric signal, the user's instruction acquired through the touch screen 25, and a speaker ID (step S678). In accordance with the information received, the voice response server 14 determines the content for which the user has made a request (step S679). The voice response server 14 transmits a result of the determination to the management server 30 (step S680).

In response to an operation performed by the user, either processes from step S683 to step S684 or processes from step S677 to step S680 are carried out. Upon end of step S684 or step S680, information about the content selected by the user is recorded in the auxiliary storage device 33 such that the content is associated with the user ID (step S691). The data recorded may be used for, for example, update of the recommendation model 48 and improvement of the content.

The CPU 31 transmits, to the CPU 51, an instruction for acquiring the content selected by the user (step S692). The CPU 51 acquires, from the content server (not illustrated), the content selected by the user (step S693). The CPU 51 presents the content on the display unit 562 (step S694).

The CPU 51 may carry out step S693 and step S694 by a "streaming method", which involves playing content while at the same time downloading files from the content server.

The management server 30 may also serve as the content server. In such a case, the CPU 51 downloads files from the management server 30.

The content may be chargeable content. In this case, a fee for the content is charged to the guest in accordance with the information recorded in step S691. A fee for the content may be paid by any payment method (such as credit card payment) separately from the room charge.

Objects to be recommended to the guest are not limited to content presented on the display device 56. A list of drinks available from room service may be presented in step S682. The screen described with reference to FIG. 22 may provide a list of various services available at a lodging facility, such as laundry service and massage service. The present embodiment is thus able to provide the information processing system 10 that recommends various services in accordance with guests' attributes.

### Embodiment 8

This embodiment relates to the information processing system 10 that controls various devices in a guest room. Features of Embodiment 8 similar to those of Embodiment 4 will not be described.

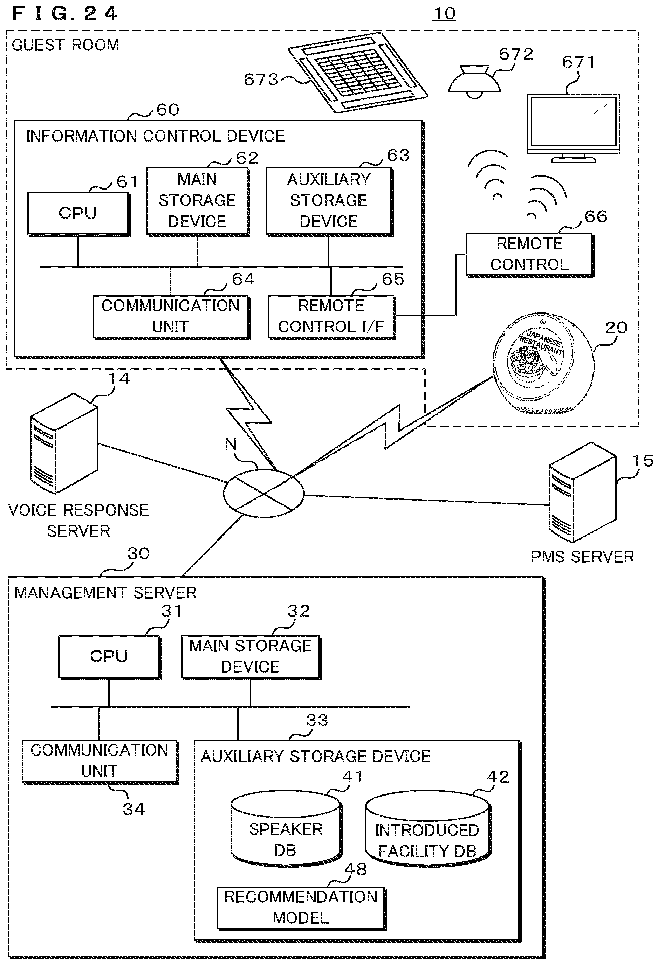

FIG. 24 is a diagram illustrating a configuration of the information processing system 10 according to Embodiment 8. The information processing system 10 includes an information processing device 60 connected to the management server 30 through a network. The smart speaker 20 and the information processing device 60 are located in a guest room. Various devices, such as a television set 671, a lighting fixture 672, and an air conditioner 673, are located in the guest room. Each of the devices is controllable by a remote control 66.

The information processing device 60 includes a CPU 61, a main storage device 62, an auxiliary storage device 63, a communication unit 64, a remote control I/F 65, and a bus. The CPU 61 is an arithmetic and control unit to execute a program according to the present embodiment. A single or a plurality of CPUs or multicore CPUs, for example, may be used as the CPU 61. The CPU 61 is connected through the bus to hardware units included in the information processing device 60.

The main storage device 62 is a storage device, such as an SRAM, a DRAM, or a flash memory. The main storage device 62 temporarily stores information necessary in the course of processing by the CPU 61 and the program being executed by the CPU 61.

The auxiliary storage device 63 is a storage device, such as an SRAM, a flash memory, or a hard disk. The auxiliary storage device 63 stores the program to be executed by the CPU 61, and various data necessary for execution of the program.

The communication unit 64 is an interface through which data communication between the information processing device 60 and the network is carried out. The remote control I/F 65 is an interface through which the information processing device 60 is connected to the remote control 66. The connection between the remote control I/F 65 and the remote control 66 may be a wired connection made through, for example, a USB cable, or may be a wireless connection that uses Bluetooth (registered trademark) or a wireless LAN. The remote control 66 may be integral with the information processing device 60. The information processing device 60 may also serve as the screen output information control device 50 according to Embodiment 6.

The information processing device 60 is a general-purpose information processing device, such as a personal computer, a tablet, or a smartphone. The information processing device 60 may be an information processing device dedicated to the information processing system 10. The information processing device 60 and the smart speaker 20 may be integral with each other.

The CPU 31 decides a recommended environment for the guest room in step S628 of the program described with reference to FIG. 14. The CPU 31 transmits the information about decided recommended environment to the information processing device 60. In step S629, the CPU 61 controls the devices in the guest room through the remote control I/F 65 and the remote control 66.

The information processing device 60 according to the present embodiment may be used in combination with Embodiment 7. Specifically, when the guest has chosen to view a television program in the sequence described with reference to FIG. 23, the CPU 61 controls the television set 671 through the remote control I/F 65 and the remote control 66 so as to present the program (which has been selected by the guest) on the television set 671 in step S694.

One or some of the devices in the guest room (e.g., the air conditioner 673) may be directly controlled by the CPU 31 through the network without involvement of the information processing device 60.

The present embodiment is able to provide the information processing system 10 that would be capable of exercising control from the management server 30 if general home-use products uncontrollable through the network are used as, for example, the television set 671, the lighting fixture 672, and the air conditioner 673.

The present embodiment is able to provide the information processing system 10 that offers services (such as suitably adjusting an indoor environment) also to a guest who does not know an operation method to control various devices in a guest room.

### Embodiment 9

This embodiment relates to the information processing system 10 that uses the recommendation model 48 shared among lodging facilities located in the same area and classified into the same category. Features of Embodiment 9 similar to those of Embodiment 1 will not be described.

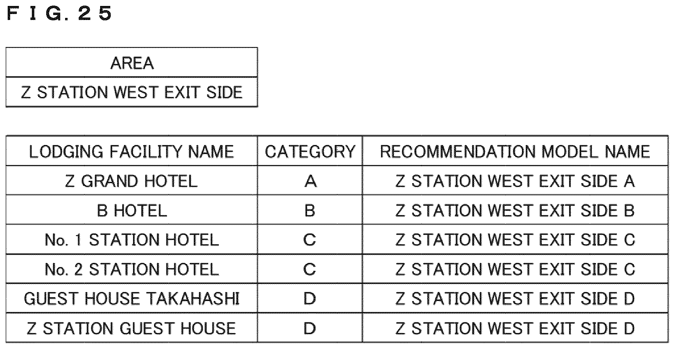

FIG. 25 is a diagram illustrating a record layout of a hotel category DB. The hotel category DB is a DB that records areas, lodging facility names, lodging facility categories, and the associated recommendation model name such that associations are established therebetween.

The hotel category DB includes an area field, a lodging facility name field, a category field, and a recommendation model name field. The area field records areas where lodging facilities are located. The lodging facility name field records the names of the lodging facilities. The category field records categories into which the lodging facilities are classified in accordance with characteristics thereof, such as price ranges, scales, and targeted customers. The recommendation model name field records the names of the recommendation models 48 to be used for the lodging facilities. The hotel category DB includes a single record for each lodging facility.

Lodging facilities are divided into, for example, the following categories: high-class hotels; high-class Japanese-style hotels; large scale budget hotels; small and medium scale budget hotels; budget Japanese-style hotels; and private lodging. Lodging facilities that have their original recommendation models 48 may each be placed into a single category.

Small scale lodging facilities that offer, for example, private lodging find it difficult to create their original recommendation models 48 by collecting a sufficient number of pieces of teaching data. At lodging facilities located in the same area and divided into the same category, guests are likely to have similar preferences. Creating and using the shared recommendation model 48 for each category makes it possible to provide the information processing system 10 that is also usable at small scale lodging facilities.

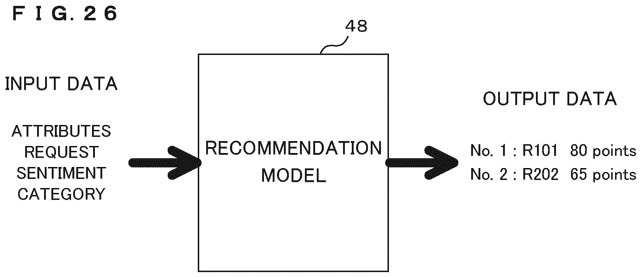

FIG. 26 is a diagram illustrating a variation of the recommendation model 48 according to Embodiment 9. The variation involves using the recommendation model 48 to which categories are to be input, instead of using different recommendation models 48 for different lodging facility categories. This makes it possible to provide the information processing system 10 that acquires information about facilities according to categories using one recommendation model 48. The variation also involves creating the recommendation model 48 for each area.

### Embodiment 10

This embodiment relates to the information processing system 10 in which the attributes of guests include the categories of lodging facilities at which the guests have stayed in the past. Lodging facilities are divided into, for example, the following categories: high-class hotels; high-class Japanese-style hotels; large scale budget hotels; small and medium scale budget hotels; budget Japanese-style hotels; and private lodging. In the following description, the categories will be identified by reference signs, such as "A" and "B". Features of Embodiment 10 similar to those of Embodiment 1 will not be described.

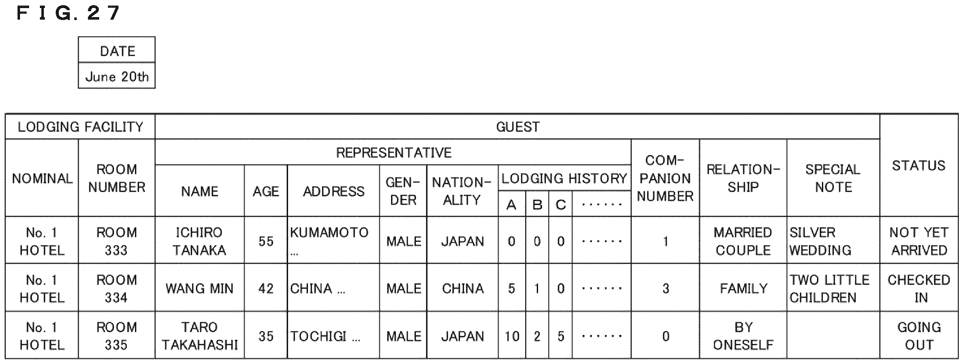

FIG. 27 is a diagram illustrating a record layout of a PMSDB according to Embodiment 10. The PMSDB illustrated in FIG. 27 is used instead of the PMSDB described with reference to FIG. 3. In the PMSDB illustrated in FIG. 27, a lodging history field is added to the guest field of the PMSDB described with reference to FIG. 3. The lodging history field includes category subfields, such as an A field, a B field. and a C field.

The A field records the numbers of days during which guests have stayed at category A lodging facilities within a predetermined period. The B field records the numbers of days during which guests have stayed at category B lodging facilities within the predetermined period. The C field records the numbers of days during which guests have stayed at category C lodging facilities within the predetermined period.

Guests staying at the same high-class hotel are divided into, for example, guests who frequently use high-class hotels of the same category, guests who usually use budget hotels, and guests who rarely use lodging facilities. These three types of guests have different preferences. The present embodiment is able to provide the information processing system 10 that makes recommendations according to such preferences.

### Embodiment 11

This embodiment relates to an information processing device that acquires additional information in cooperation with an external service, such as an E-commerce service. Features of Embodiment 11 similar to those of Embodiment 1 will not be described.

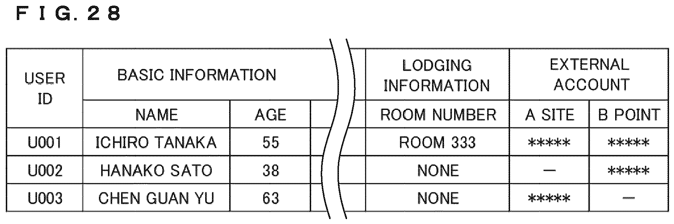

FIG. 28 is a diagram illustrating a record layout of an external information DB according to Embodiment 11. The external information DB is a DB that records user IDs uniquely assigned to users, basic information, lodging information, and information on external accounts owned by users, such that the user IDs, the basic information, and the external account information are associated with each other. The external information DB records information on, for example, users who have used a lodging facility in the past, in addition to information on users staying at the lodging facility.

The external information DB includes a user ID field, a basic information field, a lodging information field, and an external account field. The basic information field includes subfields, such as a name field and an age field. The lodging information field includes a room number field. When the external information DB is available for shared use by, for example, a lodging facility chain including many lodging facilities, the lodging information field includes a lodging facility name field.

The external account field includes subfields related to external services, such as an A site field and a B point field.

The user ID field records user IDs uniquely assigned to users. The subfields of the basic information field record user-related basic information, such as users' names and ages. The room number field records room numbers for rooms where users are staying. For users not staying, "Not Staying" is recorded in the room number field.

The A site field records account information to be used for cooperation with "A Site" that is an external service. The B point field records account information to be used for cooperation with "B Point" that is an external service. When a user has allowed account cooperation, account information to be used for the cooperation is recorded in an associated one of the subfields of the external account field. The sign "-" in the external account field indicates that a user does not allow cooperation with the account of the service.

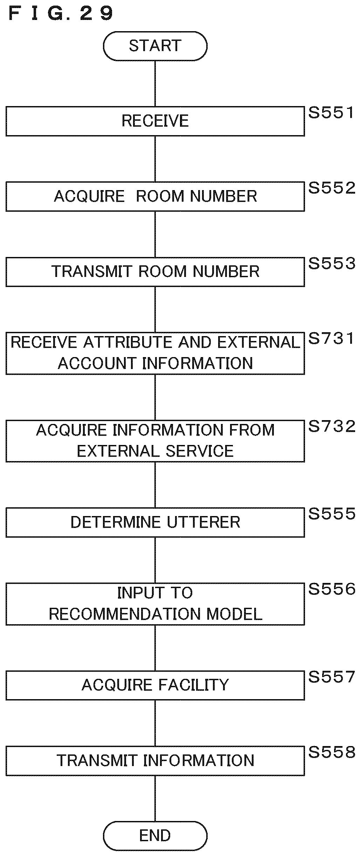

FIG. 29 is a flow chart illustrating a processing procedure of a program according to Embodiment 11. The program illustrated in FIG. 29 is used instead of the program described with reference to FIG. 8. Processes from step S551 to step S553 are identical to those in the program described with reference to FIG. 8 and will thus not be described.

The CPU 31 receives a guest's attributes and account information for an external account from the PMS server 15 (step S731). In accordance with the account information received, the CPU 31 acquires additional information on the user's attributes from a server that provides an external service (step S732). Processes to be performed after step S732 are identical to the processes of step S555 and subsequent steps in the program described with reference to FIG. 8 and will thus not be described.

In step S732, the server that provides an external service may offer recommendable facilities to the user. In accordance with the user's personal information and lodging facility-related information for which a request has been made, the server that provides an external service determines recommendable facilities for the user and transmits a result of the determination to the management server 30.

In step S558, the CPU 31 presents, on a single screen, information about the facilities acquired in step S557 and information about the facilities acquired in step S732. The CPU 31 may present information about the facilities acquired in step S732 together with a message "Facilities Recommended By A Site" such that information about the facilities acquired in step S732 are distinguished from information about the facilities acquired in step S557.

The present embodiment is able to provide the information processing system 10 that offers more suitable information to guests by using information acquired from external services.

### Embodiment 12

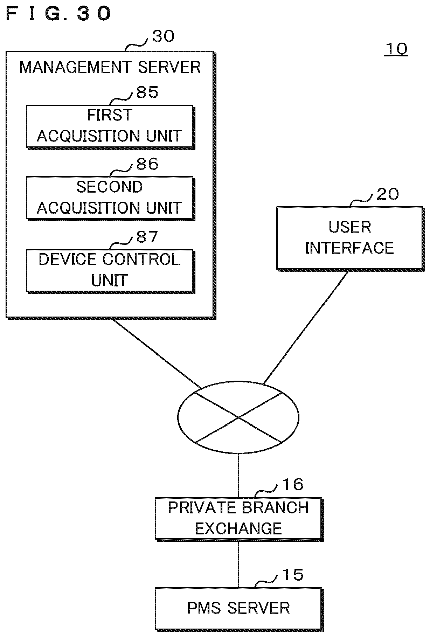

FIG. 30 is a functional block diagram of the information processing system 10 according to Embodiment 12. The information processing system 10 includes a user interface 20, a management server 30, and a PMS server 15 connected to each other through a network.

The user interface 20 is located in a guest room of a lodging facility. The PMS server 15 is connected to the network through a private branch exchange 16 of the lodging facility.

The management server 30 includes a first acquisition unit 85, a second acquisition unit 86, and a device control unit 87. The first acquisition unit 85 acquires a request based on voice data obtained from the user interface 20, and a user interface identifier by which the user interface 20 is identified.

In accordance with the user interface identifier acquired by the first acquisition unit 85, the second acquisition unit 86 acquires, from the PMS server 15, guest information on a guest staying in the guest room. In accordance with the guest information acquired by the second acquisition unit 86 and the request acquired by the first acquisition unit 85, the device control unit 87 controls devices in the guest room.

### Embodiment 13

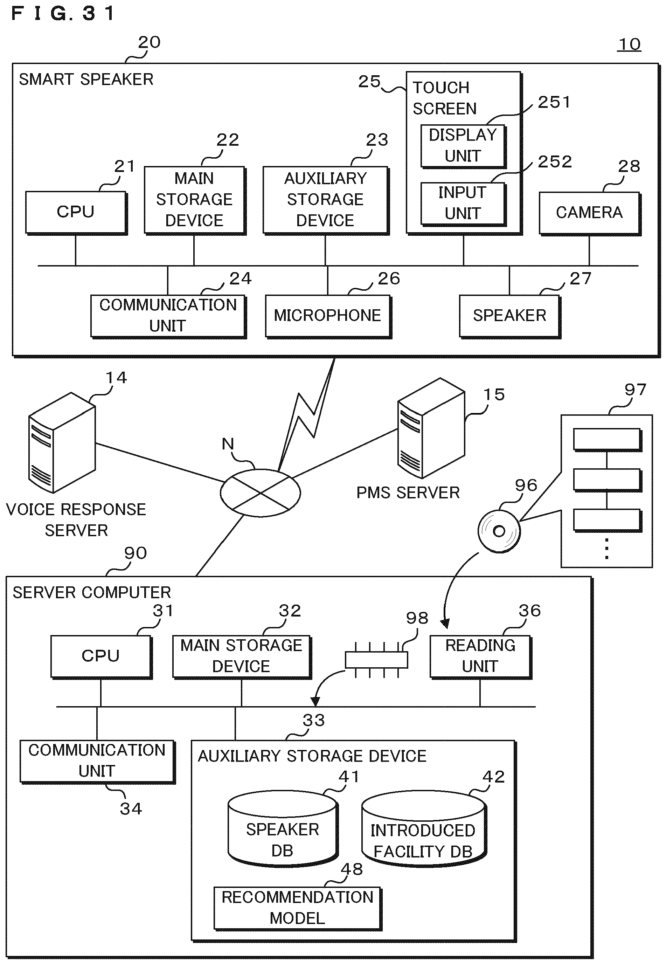

This embodiment relates to the information processing system 10 that operates a general-purpose server computer 90 in combination with a program 97 so as to achieve functions similar to those of the management server 30 described above. FIG. 31 is a diagram illustrating a configuration of the information processing system 10 according to Embodiment 13. Features of Embodiment 13 similar to those of Embodiment 1 will not be described.

The information processing system 10 according to the present embodiment includes a smart speaker 20, a voice response server 14, a PMS server 15, and the server computer 90 connected to each other through a network. The server computer 90 includes a CPU 31, a main storage device 32, an auxiliary storage device 33, a communication unit 34, a reading unit 36, and a bus.

The program 97 is recorded in a portable recording medium 96. The CPU 31 reads the program 97 through the reading unit 36 and stores the program 97 in the auxiliary storage device 33. The CPU 31 may read the program 97 stored in a semiconductor memory 98 (such as a flash memory) included in the server computer 90. The CPU 31 may download the program 97 from a different server computer (not illustrated) connected through the communication unit 34 and a network (not illustrated), and may store the program 97 in the auxiliary storage device 33.

The program 97 is installed in the form of a control program for the server computer 90, loaded into the main storage device 32, and then executed. The server computer 90 thus functions as the management server 30 described above.

Technical features (constituent elements) described in the embodiments may be combined with each other. Combining the technical features makes it possible to provide new technical features.

The embodiments disclosed herein are to be considered as not limitative but illustrative in all respects. The scope of the present invention is defined not by the above description but by the claims, and is intended to include all changes falling within the meaning and range equivalent to the claims.

For example, the servers in each of the embodiments may not function as independent servers, but a single server may serve as a plurality of servers. Specifically, the management server 30 and the voice response server 14 illustrated in FIG. 2 function as independent servers, but one of these servers may serve as both of the servers. Similarly, the management server 30 and the PMS server 15 illustrated in FIG. 2 function as independent servers, but one of these servers may serve as both of the servers.

### REFERENCE SIGNS LIST

- 10: information processing system
- 14: voice response server
- 15: PMS server
- 16: PBX (private branch exchange)
- 20: smart speaker (user interface)
- 21: CPU
- 22: main storage device
- 23: auxiliary storage device
- 24: communication unit
- 25: touch screen
- 251: display unit
- 252: input unit
- 26: microphone
- 27: speaker
- 28: camera
- 30: management server
- 31: CPU
- 32: main storage device
- 33: auxiliary storage device
- 34: communication unit
- 36: reading unit
- 41: speaker DB
- 42: introduced facility DB
- 48: recommendation model
- 50: screen output information control device
- 51: CPU
- 52: main storage device
- 53: auxiliary storage device
- 54: communication unit
- 55: display device I/F
- 56: display device (device)
- 561: input unit
- 562: display unit
- 60: information processing device
- 61: CPU
- 62: main storage device
- 63: auxiliary storage device
- 64: communication unit
- 65: remote control I/F
- 66: remote control
- 671: television set
- 672: lighting fixture
- 673: air conditioner
- 711: VOD button
- 712: TV button
- 713: service/sightseeing information button
- 714: access information section
- 715: subtitle section
- 716: selection button
- 85: first acquisition unit
- 86: second acquisition unit
- 87: device control unit
- 90: server computer
- 96: portable recording medium
- 97: program
- 98: semiconductor memory

## Claims

1. A program to cause a computer to execute the steps of:
acquiring a request based on voice data obtained from a user interface located in a guest room of a lodging facility, and a user interface identifier by which the user interface is identified;
acquiring guest information on a guest staying in the guest room in accordance with the user interface identifier acquired; and
controlling a device related to the guest room in accordance with the guest information and the request acquired.

2. The program according to claim 1, wherein
the device is a screen output information control device to control a screen of a display located in the guest room.

3. The program according to claim 1 or 2, wherein
a voice is output from the user interface in accordance with the guest information and the request acquired, and
textual information associated with the voice is output from the user interface.

4. The program according to any one of claims 1 to 3, wherein
the guest information is acquired through a private branch exchange of the lodging facility.

5. The program according to any one of claims 1 to 4, wherein,
the device is an air conditioner or a lighting fixture to adjust an environment of the guest room.

6. The program according to any one of claims 1 to 5, wherein
the guest information includes information on a hotel that the guest staying in the guest room has used before.

7. The program according to any one of claims 1 to 6, wherein
a model associated with the lodging facility is selected from a plurality of models that outputs information indicating how the device is to be controlled upon input of guest information and a guest's request based on voice data,
the guest information acquired and the request based on the voice data acquired are input to the model selected, so as to acquire information that is output from the model and indicates how the device is to be controlled, and
the device in the guest room is controlled in accordance with the information acquired.

8. An information processing method to cause a computer to execute the steps of:
acquiring a request based on voice data obtained from a user interface located in a guest room of a lodging facility, and a user interface identifier by which the user interface is identified;
acquiring guest information on a guest staying in the guest room in accordance with the user interface identifier acquired; and
controlling a device in the guest room in accordance with the guest information and the request acquired.

9. An information processing device comprising:
a first acquisition unit to acquire a request based on voice data obtained from a user interface located in a guest room of a lodging facility, and a user interface identifier by which the user interface is identified;
a second acquisition unit to acquire guest information on a guest staying in the guest room in accordance with the user interface identifier acquired by the first acquisition unit; and
a device control unit to control a device in the guest room in accordance with the guest information acquired by the second acquisition unit and the request acquired by the first acquisition unit.

10. An information processing system comprising:
a user interface located in a guest room of a lodging facility;
a management server; and
a server of a management system of the lodging facility, wherein
the user interface, the management server, and the server of the management system of the lodging facility are connected to each other through a network,
the server of the management system of the lodging facility is connected to the network through a private branch exchange of the lodging facility, and
the management server includes
a first acquisition unit to acquire a request based on voice data obtained from the user interface, and a user interface identifier by which the user interface is identified,
a second acquisition unit to acquire, from the server of the management system of the lodging facility, guest information on a guest staying in the guest room in accordance with the user interface identifier acquired by the first acquisition unit, and
a device control unit to control a device in the guest room in accordance with the guest information acquired by the second acquisition unit and the request acquired by the first acquisition unit.
